(19)

**Europäisches Patentamt**
**European Patent Office**
**Office européen des brevets**

(11) **EP 4 586 184 A1**

(12) **EUROPEAN PATENT APPLICATION**
published in accordance with Art. 153(4) EPC

(43) Date of publication:
**16.07.2025   Bulletin 2025/29**

(51) International Patent Classification (IPC):
**G06T 5/00** (2024.01)         **G06N 20/00** (2019.01)

(21) Application number: **23894161.1**

(52) Cooperative Patent Classification (CPC):
**G06N 20/00; G06T 5/00**

(22) Date of filing: **26.06.2023**

(86) International application number:
**PCT/JP2023/023576**

(87) International publication number:
**WO 2024/111145 (30.05.2024 Gazette 2024/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.11.2022   JP 2022186818**

(71) Applicant: **Hamamatsu Photonics K.K.
Hamamatsu-shi, Shizuoka 435-8558 (JP)**

(72) Inventors:
• **TSUCHIYA, Satoshi
  Hamamatsu-shi, Shizuoka 435-8558 (JP)**
• **TAKESHIMA, Tomochika
  Hamamatsu-shi, Shizuoka 435-8558 (JP)**

(74) Representative: **Hoffmann Eitle
Patent- und Rechtsanwälte PartmbB
Arabellastraße 30
81925 München (DE)**

(54) **NOISE ELIMINATION METHOD, NOISE ELIMINATION PROGRAM, NOISE ELIMINATION SYSTEM, AND LEARNING METHOD**

(57)   Noise can be appropriately removed from data having a plurality of values, such as an image, even in a case in which an AI-dedicated chip is used.

A noise removal method is a method for removing noise from data having a plurality of values, and includes an acquisition step (S01) of acquiring noise removal target data that has a plurality of values and that is a noise removal target, a first noise generation step (S02) of performing first noise removal processing on the acquired noise removal target data, to generate first noise data related to noise to be removed by the first noise removal processing, a second noise generation step (S03) of inputting the generated first noise data to a learning model generated in advance by machine learning, to generate second noise data, and a noise removal step (S04) of using the generated second noise data, to generate data after noise removal from the noise removal target data.

**Fig.6**

## Description

### Technical Field

The present invention relates to a noise removal method, a noise removal program, and a noise removal system for removing noise from data having a plurality of values, and a learning method for generating a learning model used for noise removal.

### Background Art

In the related art, it has been proposed that a machine learning technique such as a neural network is used for noise removal of an image (for example, see Patent Literature 1).

### Citation List

### Patent Literature

Patent Literature 1: Japanese Unexamined Patent Publication No. 2022-101507

## Summary of Invention

### Technical problem

A graphics processing unit (GPU) is often used for computation using a learning model generated by machine learning, that is, artificial intelligence (AI) inference, from the viewpoint of a speed and the like. On the other hand, it is conceivable to use an application-specific integrated circuit (ASIC), a system on a chip (SOC), or the like as an artificial intelligence (AI)-dedicated chip for computation using a learning model for noise removal of an image. By using these AI-dedicated chips for the noise removal of the image, it is possible to achieve low cost and low power consumption as compared with a case in which the GPU is used.

However, a data size of an image that can be used in the AI-dedicated chip may be smaller than a data size of the image that is a noise removal target. For example, the image that is the noise removal target is an image in which a brightness value (pixel value) of each pixel is an unsigned integer (uint) of 14 bits or 16 bits, while the image that can be used in the AI-dedicated chip may be an image in which a brightness value of each pixel is an integer (int) of 8 bits.

In such a case, the image that is the noise removal target is subjected to quantization to reduce the data size of the image, and the image is used as the image that can be used in the AI-dedicated chip, so that the noise can be removed by using the AI-dedicated chip. However, since the accuracy of the brightness value is decreased due to the quantization to reduce the data size, it may be difficult to appropriately remove noise.

One embodiment of the present invention has been made in view of the above-described circumstances, and an object of the present invention is to provide a noise removal method, a noise removal program, a noise removal system, and a learning method with which noise can be appropriately removed from data having a plurality of values, such as an image, even in a case of using an AI-dedicated chip.

### Solution to Problem

In order to achieve the above-described object, one embodiment of the present invention provides a noise removal method for removing noise from data having a plurality of values, the noise removal method including: an acquisition step of acquiring noise removal target data that has a plurality of values and that is a noise removal target; a first noise generation step of performing first noise removal processing on the noise removal target data acquired in the acquisition step, to generate first noise data related to noise to be removed by the first noise removal processing; a second noise generation step of inputting the first noise data generated in the first noise generation step to a learning model generated in advance by machine learning for generating second noise data related to noise to be removed from the noise removal target data from the first noise data, to generate the second noise data; and a noise removal step of using the second noise data generated in the second noise generation step, to generate data after noise removal from the noise removal target data acquired in the acquisition step.

In the noise removal method according to the embodiment of the present invention, the first noise data generated by performing the first noise removal processing on the noise removal target data is input to the learning model to generate the second noise data, and the data after the noise removal is generated by using the second noise data. Since the first noise data is generated by performing the first noise removal processing on the noise removal target data, it is possible to perform the computation related to the noise removal via the learning model while suppressing a decrease in the accuracy of the data. As a result, with the noise removal method according to the embodiment of the present invention, even in a case in which the AI-dedicated chip is used, the noise can be appropriately removed from the data having the plurality of values, such as the image.

In the first noise generation step, quantization may be performed on data obtained by the first noise removal processing, to generate the first noise data, and, in the noise removal step, inverse quantization may be performed on the second noise data generated in the second noise generation step, to generate the data after the noise removal from inverse-quantized data. With this configuration, the first noise data can be made appropriate in accordance with the computation using the learning model. For example, the first noise data can be made in accordance with the performance of the AI-dedicated chip that performs the computation using the learning model. As a result, it is possible to perform appropriate and reliable noise removal.

In the first noise generation step, quantization may be performed for each of a plurality of ranges of magnitude of the plurality of values, to generate a plurality of the first noise data, and, in the second noise generation step, the plurality of first noise data generated in the first noise generation step may be input to the learning model, to generate the second noise data. With this configuration, it is possible to perform more appropriate noise removal in consideration of the plurality of first noise data.

Processing via the first noise generation step and the second noise generation step may be performed by processing devices having different performances from each other. With this configuration, for example, the AI-dedicated chip can perform the computation using the learning model. As a result, it is possible to remove the noise at low cost and with low power consumption.

In the first noise generation step, a preset filter for performing the first noise removal processing may be applied to the noise removal target data as the first noise removal processing, to generate the first noise data. In the first noise generation step, processing of removing frequency components in a preset range may be performed on the noise removal target data as the first noise removal processing, to generate the first noise data. With these configurations, the first noise removal processing can be appropriately and reliably performed. As a result, it is possible to perform appropriate and reliable noise removal.

In the first noise generation step, data of magnitude reflecting magnitude of the plurality of values of the noise removal target data may be also generated, and, in the second noise generation step, the first noise data and the data of magnitude that are generated in the first noise generation step may be input to the learning model, to generate the second noise data. By generating the data of magnitude and inputting the data of magnitude to the learning model, the magnitude of the plurality of values of the noise removal target data can be taken into account in the learning model. As a result, it is possible to perform more appropriate noise removal.

The noise removal target data may be an image, spectral data, or time-series data. With this configuration, it is possible to appropriately remove the noise from the image, the spectral data, or the time-series data.

By the way, the embodiment of the present invention can be described as the invention of the noise removal method as described above, and can also be described as the invention of a noise removal program and a noise removal system as described later. These are substantially the same invention only in that the categories are different, and have the same operation and effect.

That is, one embodiment of the present invention provides a noise removal program for removing noise from data having a plurality of values, the noise removal program causing a computer to function as: acquisition means for acquiring noise removal target data that has a plurality of values and that is a noise removal target; first noise generation means for performing first noise removal processing on the noise removal target data acquired in the acquisition means, to generate first noise data related to noise to be removed by the first noise removal processing; second noise generation means for inputting the first noise data generated in the first noise generation means to a learning model generated in advance by machine learning for generating second noise data related to noise to be removed from the noise removal target data from the first noise data, to generate the second noise data; and noise removal means for using the second noise data generated in the second noise generation means, to generate data after noise removal from the noise removal target data acquired in the acquisition means.

In addition, one embodiment of the present invention provides a noise removal system for removing noise from data having a plurality of values, the noise removal system including: acquisition means for acquiring noise removal target data that has a plurality of values and that is a noise removal target; first noise generation means for performing first noise removal processing on the noise removal target data acquired in the acquisition means, to generate first noise data related to noise to be removed by the first noise removal processing; second noise generation means for inputting the first noise data generated in the first noise generation means to a learning model generated in advance by machine learning for generating second noise data related to noise to be removed from the noise removal target data from the first noise data, to generate the second noise data; and noise removal means for using the second noise data generated in the second noise generation means, to generate data after noise removal from the noise removal target data acquired in the acquisition means.

In addition, in order to achieve the above-described object, one embodiment of the present invention provides a learning method for generating a learning model that is used to remove noise from data having a plurality of values, the learning method including: an acquisition step for learning of acquiring data for learning that has a plurality of values and that includes noise; a first noise generation step for learning of performing first noise removal processing on the data for learning acquired in the acquisition step for learning, to generate first noise data for learning related to noise to be removed by the first noise removal processing; and a learning step of performing machine learning using the first noise data for learning generated in the first noise generation step for learning as an input to the learning model, to generate the learning model.

With the learning method according to the embodiment of the present invention, it is possible to generate the learning model used in the noise removal method.

In the first noise generation step for learning, frequency components of the data for learning acquired in the acquisition step for learning may be generated, and a method of the first noise removal processing may be determined based on the generated frequency components. With this configuration, the first noise removal processing can be performed by an appropriate method. As a result, it is possible to perform more appropriate noise removal.

**Advantageous Effects of Invention**

According to the embodiments of the present invention, it is possible to appropriately remove the noise from the data having the plurality of values, such as the image, even in a case of using the AI-dedicated chip.

**Brief Description of Drawings**

Fig. 1 is a diagram showing a configuration of a noise removal system and a learning system according to an embodiment of the present invention.

Fig. 2 is a diagram showing an example of images before and after quantization.

Fig. 3 is a diagram showing an example of a contrast of a quantized image.

Fig. 4 is a diagram showing examples of a contrast of a structure and a contrast of noise.

Fig. 5 is a diagram showing an example of an image related to processing up to inputting an image to a learning model.

Fig. 6 is a diagram showing an example of an image related to entire processing of noise removal.

Fig. 7 is a flowchart showing a noise removal method that is processing executed by the noise removal system according to the embodiment of the present invention.

Fig. 8 is a flowchart showing a learning method that is processing executed by the learning system according to the embodiment of the present invention.

Fig. 9 is a diagram showing that noise depends on a brightness value of an image.

Fig. 10 is a diagram showing another example of the image related to the processing up to inputting the image to the learning model.

Fig. 11 is a diagram showing another example of the image related to the processing up to inputting the image to the learning model.

Fig. 12 is a diagram showing an image that is a noise removal target and frequency components of the image.

Fig. 13 is a diagram showing an image for learning and frequency components of the image.

Fig. 14 is a diagram showing the frequency components related to the image for learning.

Fig. 15 is a graph related to the frequency components related to the image for learning.

Fig. 16 is a diagram showing a filter that is a candidate used in first noise removal processing and frequency components of the filter.

Fig. 17 is a graph related to the frequency components related to the filter that is the candidate used in the first noise removal processing.

Fig. 18 is a diagram showing an image used in Example.

Fig. 19 is a table showing results of Example and Comparative Example.

Fig. 20 is a diagram showing an example of images according to Example and Comparative Example.

Fig. 21 is a diagram showing another example of the images according to Example and Comparative Example.

Fig. 22 is a diagram showing still another example of the images according to Example and Comparative Example.

Fig. 23 is a diagram showing a speed of learning according to the present embodiment.

Fig. 24 is a diagram showing a configuration of a noise removal program and a learning program according to the embodiment of the present invention, together with a recording medium.

## Description of Embodiments

Hereinafter, embodiments of a noise removal method, a noise removal program, a noise removal system, and a learning method according to the present invention will be described in detail with reference to the drawings. In the description of the drawings, the same elements are denoted by the same reference numerals, and the duplicated description will be omitted.

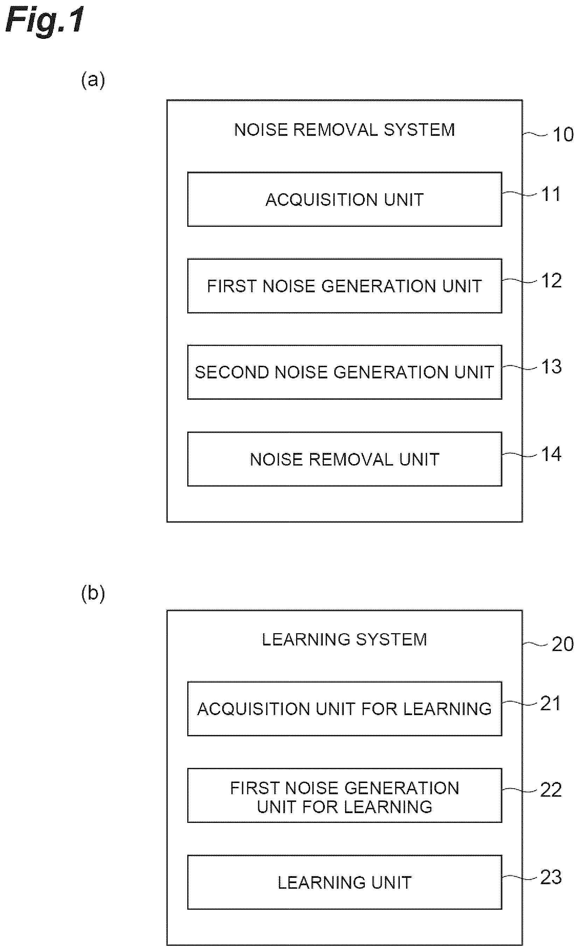

In (a) of Fig. 1, a noise removal system 10 according to the present embodiment is shown. In (b) of Fig. 1, a learning system 20 according to the present embodiment is shown. The noise removal system 10 is a system (device) that removes noise from data having a plurality of values. A learning model (trained model or inference model) generated by machine learning is used for noise removal via the noise removal system 10. The learning system 20 is a system (device) that performs the machine learning to generate the learning model used in the noise removal system 10.

In the present embodiment, the data that has the plurality of values and that is a noise removal target is, for example, an image. In addition, the noise included in the image is, for example, read noise and shot noise. The image that is the noise removal target is, for example, an image of a substrate manufactured on a manufacturing line, and the image after noise removal is used for checking defects in the substrate. Alternatively, the image that is the noise removal target is an image of a cell, and the image after noise removal is used for an analysis of the cell. In addition, the image that is the noise removal target may be any image other than the above-described example as long as the image includes the noise.

The data that has the plurality of values and that is the noise removal target does not have to be the image, and may be, for example, spectral data or time-series data. The spectral data is, for example, data of an intensity with respect to a wave number (wavelength or frequency). The time-series data is, for example, data of an intensity for each time point, and specifically, is output data from a photomultiplier tube, measured data of biological information such as a hemoglobin concentration, and the like.

The noise removal system 10 and the learning system 20 include a computer in the related art including hardware such as a processor, a memory, and a communication module. The noise removal system 10 may include a processor for performing computation using the learning model and a processor for performing other types of computation. The processor for performing the computation using the learning model is, for example, an ASIC or an SOC as an AI-dedicated chip. Alternatively, the processor may be a central processing unit (CPU) or a graphics processing unit (GPU). In addition, the processor for performing other types of computation is, for example, a field programmable gate array (FPGA), a CPU, or a GPU. The processor that performs the computation in the learning system 20 is, for example, a CPU or a GPU. In addition, the noise removal system 10 and the learning system 20 may include an imaging device such as a camera for acquiring an image used in processing. Further, the noise removal system 10 and the learning system 20 may be included in an imaging device such as a camera for acquiring an image used in processing. In Fig. 1, the noise removal system 10 and the learning system 20 are shown as separate systems (devices), but may be implemented by the same system (device).

The computers constituting the noise removal system 10 and the learning system 20 may be a computer system including a plurality of computers. Further, the computer may be configured by cloud computing or edge computing. Each function of the noise removal system 10 and the learning system 20 described later is exhibited by operating these components by a program or the like.

By using the above-described AI-dedicated chip as the processor for performing the computation using the learning model in the noise removal system 10, it is possible to achieve low cost and low power consumption, for example, as compared with a case in which a GPU is used for the computation using the learning model.

As described above, in this case, a data size of the image that can be used in the AI-dedicated chip may be smaller than a data size of the image that is the noise removal target. In the present embodiment, it is assumed that the data size of the image that can be used in the AI-dedicated chip is smaller than the data size of the image.

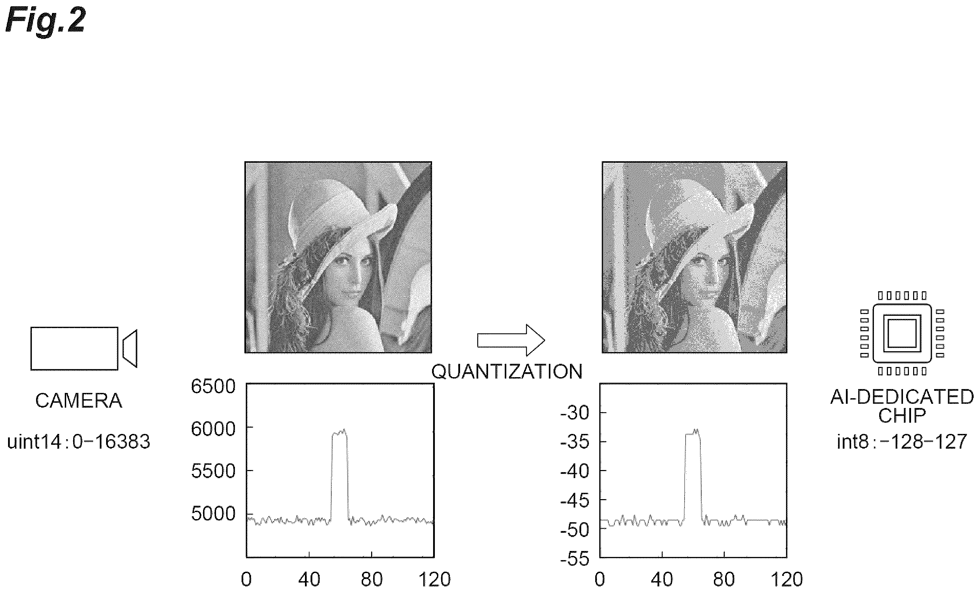

For example, as shown in Fig. 2, a case will be described in which the image that is the noise removal target (image obtained by being captured by the imaging device such as the camera) is an image in which a brightness value of each pixel is an unsigned integer (uint14: 0 to 16383) of 14 bits, and the image that can be used in the AI-dedicated chip is an image in which a brightness value of each pixel is an integer (int: - 128 to 127) of 8 bits. The AI-dedicated chip cannot handle an image having a brightness value of 14 bits. In order to handle the image with the AI-dedicated chip, as shown in Fig. 2, it is required to quantize the image so that the image can be handled with the AI-dedicated chip. In graphs corresponding to the images before and after quantization shown in Fig. 2, a horizontal axis indicates a pixel, and a vertical axis indicates a brightness value. In a case in which the image that is the noise removal target is quantized to reduce the data size of the image, the accuracy of the brightness value is decreased, and thus it may be difficult to appropriately remove noise. In the present embodiment, even in a case in which the AI-dedicated chip is used for the computation using the learning model, the noise can be appropriately removed from the image.

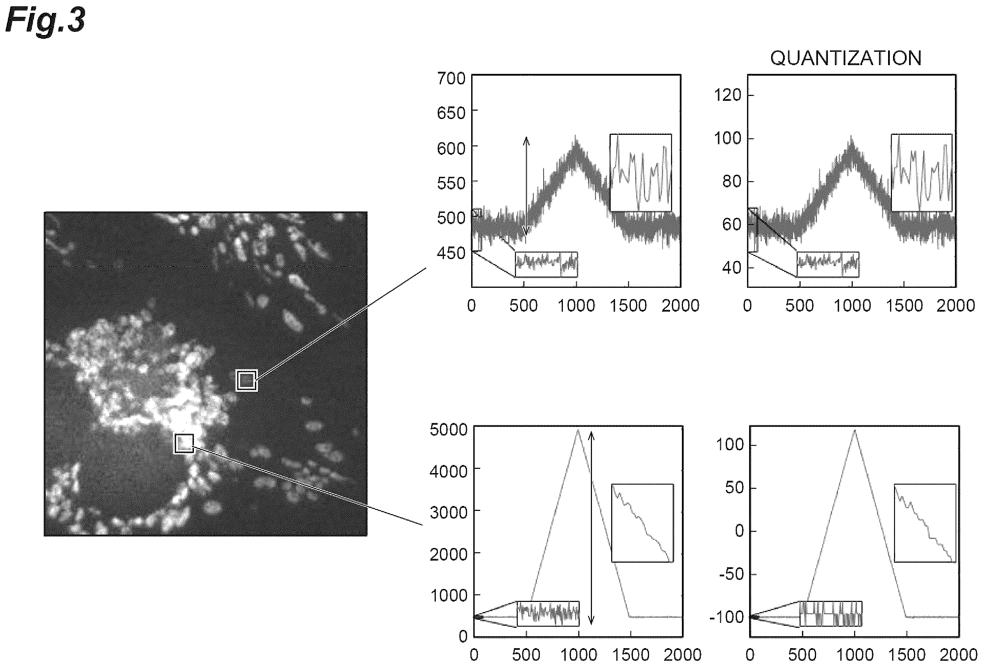

The decrease in the accuracy of brightness when the quantization is performed depends on the contrast of the image that is the quantization target. Fig. 3 shows a brightness value of each portion of the image (left graphs among four graphs in Fig. 3) and a brightness value after the quantization of the portion (right graphs among the four graphs in Fig. 3). In a portion of the image corresponding to an upper left graph, the contrast is relatively low (about 100 in a range of the brightness value) and is lower than 8 bits (256), which is a resolution of the AI-dedicated chip. Therefore, as shown in an upper right graph, the accuracy of the brightness value after the quantization is not decreased, or the decrease is small. That is, in a case in which the contrast of the image is small, there is little or no loss of information related to the brightness due to the quantization. In this case, even in a case in which the image after the quantization is used, appropriate noise removal can be performed.

On the other hand, in a portion of the image corresponding to a lower left graph, the contrast is relatively high (about 4500 in a range of the brightness value) and is higher than 8 bits (256), which is the resolution of the AI-dedicated chip. Therefore, as shown in a lower right graph, the accuracy of the brightness value after the quantization is significantly decreased. That is, in a case in which the contrast of the image is large, the loss of information related to the brightness due to the quantization is large, and significant degradation of the image occurs. In this case, in a case in which the image after the quantization is used, appropriate noise removal cannot be performed, as described above.

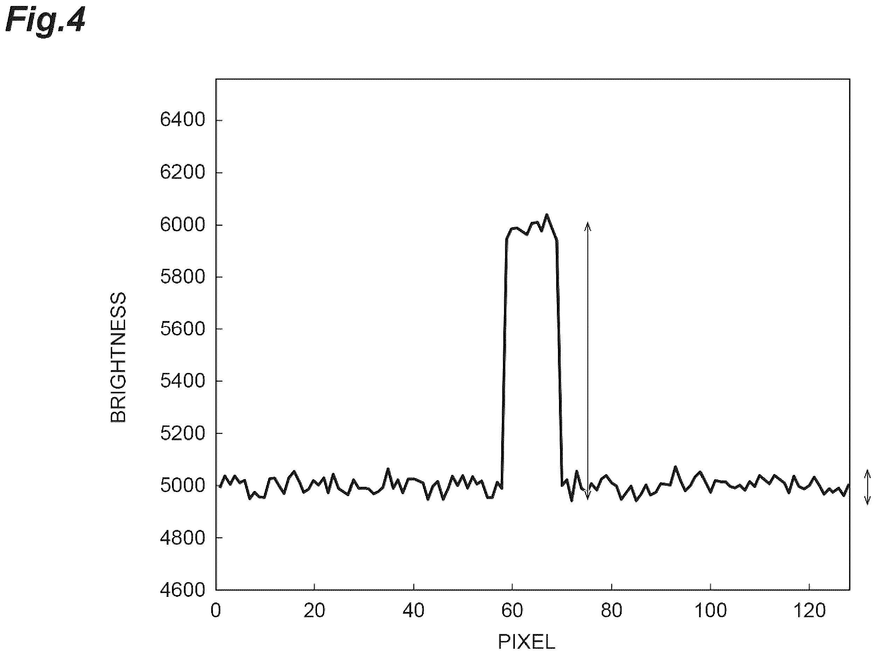

As shown in a graph of Fig. 4, a large contrast in the image (the contrast indicated by a long arrow in Fig. 4) is caused by a change in a brightness value of a substance (in the present embodiment, referred to as a structure) other than the noise, which is shown in the image. The contrast change of the structure is often larger than 8 bits (256), which is the resolution of the AI-dedicated chip. On the other hand, a contrast of the noise included in the image (contrast indicated by a short arrow in Fig. 4) is usually smaller than the contrast change of the above-described structure, and is often smaller than 8 bits (256), which is the resolution of the AI-dedicated chip.

In the present embodiment, noise removal is performed based on the above description. In the present embodiment, by using, for the noise removal, an image in which the brightness value related to the structure is roughly removed, the decrease in the accuracy due to the quantization is prevented, and the noise is appropriately removed even in a case in which the computation using the learning model is performed by the AI-dedicated chip.

Subsequently, the functions of the noise removal system 10 and the learning system 20 according to the present embodiment will be described. As shown in Fig. 1, the noise removal system 10 includes an acquisition unit 11, a first noise generation unit 12, a second noise generation unit 13, and a noise removal unit 14.

The acquisition unit 11 is acquisition means for acquiring noise removal target data that has a plurality of values and that is the noise removal target. In the present embodiment, the noise removal target data is an image, as described above. The acquisition unit 11 acquires the image by receiving, for example, an image obtained by being captured by the imaging device such as the camera from the imaging device. The imaging device that acquires the image that is the noise removal target by imaging is, for example, a visible light camera or an X-ray camera. In addition, the imaging device may be other than the above-described example.

In addition, the acquisition unit 11 may acquire the image by receiving an image input operation of a user to the noise removal system 10. In addition, the acquisition unit 11 may acquire the image by any method other than the above-described example.

The image acquired by the acquisition unit 11 has a larger data size than the image that can be input to the learning model used in the noise removal system 10 as described above (that is, the image that can be used in the AI-dedicated chip). For example, a range (resolution) of the brightness value of each pixel is 8 bits in the image that can be input to the learning model, while the range thereof is 14 bits in the image acquired by the acquisition unit 11. The acquisition unit 11 outputs the acquired image to the first noise generation unit 12.

The first noise generation unit 12 is first noise generation means for performing first noise removal processing on the noise removal target data acquired by the acquisition unit 11, to generate first noise data related to noise to be removed by the first noise removal processing. The first noise generation unit 12 may perform the quantization on data obtained by the first noise removal processing, to generate the first noise data. The first noise generation unit 12 may apply a preset filter for performing the first noise removal processing to the noise removal target data as the first noise removal processing, to generate the first noise data. Further, the first noise generation unit 12 may perform processing of removing frequency components in a preset range on the noise removal target data as the first noise removal processing, to generate the first noise data.

The first noise data is obtained by roughly excluding each brightness value corresponding to the structure from each brightness value of the image that is the noise removal target. That is, the first noise data is obtained by roughly excluding the contrast of the structure.

The first noise generation unit 12 generates the first noise data, for example, as follows. The first noise generation unit 12 receives the image that is the noise removal target from the acquisition unit 11. The first noise generation unit 12 stores the preset filter for performing the first noise removal processing in advance, and applies the filter to the input image. The filter is, for example, a filter that smooths the image. Specifically, the filter is a Gaussian filter, an averaging filter, a median filter, a bilateral filter, or the like.

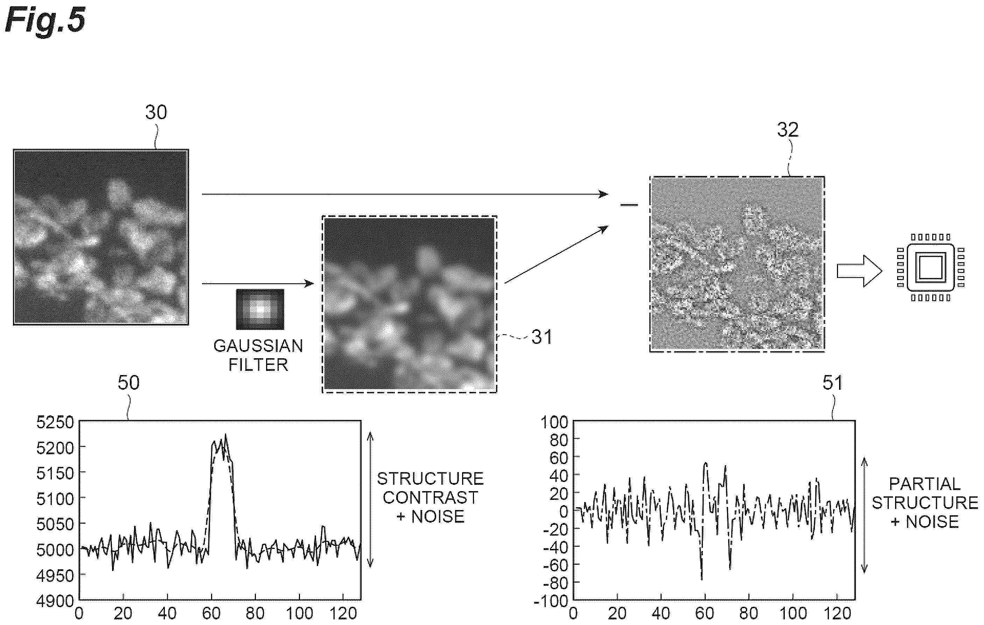

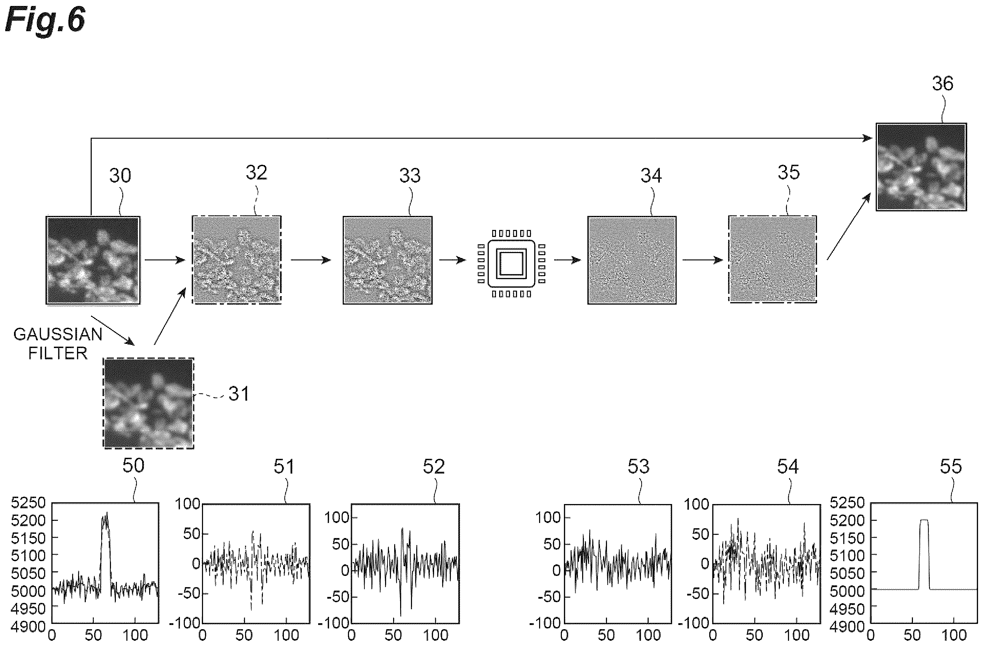

Figs. 5 and 6 show examples of an image 30 that is the noise removal target and an image 31 after the filter application. Further, a graph 50 of the brightness value for each pixel of the images 30 and 31 is shown. In the graph 50, a horizontal axis indicates a pixel, and a vertical axis indicates a brightness value (the same applies to Figs. 5 and 6). A line type in the graph 50 corresponds to a line type of a frame of each image. Figs. 5 and 6 show an example in which a Gaussian filter is applied to the image 30 that is the noise removal target, to generate the image 31 after the filter application.

The first noise generation unit 12 generates an image of a difference between the image that is the noise removal target and the image after the filter application. For example, the first noise generation unit 12 generates an image of a difference in which a value obtained by subtracting the brightness value of the image after the filter application, from the brightness value of the image that is the noise removal target for each corresponding pixel is the brightness value of the pixel. Figs. 5 and 6 show an example of an image 32 of the difference and a graph 51 of the brightness value for each pixel of the image 32 of the difference.

As shown in the graph 50 of Fig. 5, the brightness value of the image 30 that is the noise removal target includes the structure contrast and the noise. In addition, as shown in the graph 51 of Fig. 5, the brightness value of the image 32 of the difference includes (can be considered to include) a partial structure and the noise. As shown in these two graphs 50 and 51, the contrast of the image 30 that is the noise removal target is large, and the contrast of the image 32 of the difference is small. The scales of the vertical axes of the two graphs 50 and 51 are different from each other, and the scale of the graph of the image 32 of the difference is finer than the graph 50 of the image 30 that is the noise removal target. In the image of the difference including the noise and having a small contrast, it is possible to suppress a decrease in the accuracy even in a case in which the quantization is performed.

The first noise generation unit 12 may perform processing of removing the frequency components in a preset range on the image that is the noise removal target as the first noise removal processing, instead of applying the filter. For example, the first noise generation unit 12 generates the frequency components of the image that is the noise removal target by performing fast Fourier transform (FFT), wavelet transform, or the like on the image that is the noise removal target. The first noise generation unit 12 stores a threshold value of a frequency in advance and removes frequency components of a frequency equal to or greater than the stored threshold value. Usually, the noise is a highfrequency component, so that the frequency component of the high frequency is removed in this way. The first noise generation unit 12 performs inverse transform of the frequency components after the removal, to generate an image after the frequency component removal. The first noise generation unit 12 generates an image of a difference between the image that is the noise removal target and the image after the frequency component removal. The first noise generation unit 12 may generate the image of the difference by using, in combination, the processing related to the filter and the processing related to the frequency components.

The first noise generation unit 12 performs the quantization on the image of the difference. The quantization is processing of making the image that can be used in the AI-dedicated chip. The resolution of each pixel of the image after the quantization is the resolution of the image that can be used in the AI-dedicated chip. The image after the quantization is the first noise data. Fig. 6 shows an example of an image 33 after the quantization that is the first noise data generated from the image 32 of the difference, and a graph 52 of a brightness value for each pixel of the image 33 after the quantization.

The quantization can be performed by a method in the related art. For example, the quantization is performed by calculating the brightness value of the image after the quantization from the brightness value of the image of the difference for each pixel. Specifically, the brightness value of the image after the quantization is calculated by the following expression. In this example, the number and the positional relationship of the pixels are not changed before and after the quantization.

[Math. 1]

$$\text{round}\left( (DiffImage - minDiff) \times \frac{maxAI - minAI}{maxDiff - minDiff} + minAI \right)$$

The functions and variables of the above-described expression are as follows.

round(x): A function of rounding (for example, rounding off) x to a value of a brightness value (resolution) of an AI-dedicated chip.

DiffImage: A brightness value of an image of a difference.

maxDiff, minDiff: A maximum value and a minimum value of a brightness value of an image of a difference that is a quantization target. These values are set in advance from an assumed size of the noise and the like such that the noise is included in the image of the difference.

maxAI, minAI: A maximum value and a minimum value of a brightness value (resolution) of an AI-dedicated chip.

The first noise generation unit 12 outputs the image after the quantization, which is the generated first noise data, to the second noise generation unit 13. The first noise generation unit 12 may output the image 33 of the difference to the second noise generation unit 13 without performing the quantization.

The first noise data does not necessarily have to be the above-described noise data, and, for example, the first noise data need only be obtained from the image that is the noise removal target and need only include the noise of the image that is the noise removal target and have the contrast lower than the contrast of the image that is the noise removal target. In addition, the first noise generation unit 12 does not necessarily have to generate (generate) the first noise data as described above, and need only perform some first noise removal processing to generate the first noise data related to the noise to be removed by the first noise removal processing.

The second noise generation unit 13 is second noise generation means for inputting the first noise data generated by the first noise generation unit 12 to the learning model generated in advance by machine learning, to generate second noise data. The learning model is a learning model for generating the second noise data related to the noise to be removed from the noise removal target data from the first noise data.

The second noise data indicates the noise to be removed from the noise removal target data. That is, the number of pixels and the resolution of the second noise data are the same as the number of pixels and the resolution of the first noise data. In the present embodiment, since the first noise data for generating the second noise data is quantized, the noise is quantized in the second noise data. However, in a case in which a non-quantized image is output from the first noise generation unit 12, the noise is not quantized in the second noise data.

The second noise generation unit 13 generates the second noise data, for example, as follows. The second noise generation unit 13 receives the quantized difference image, which is the first noise data, input from the first noise generation unit 12. The second noise generation unit 13 stores the learning model in advance. The learning model is a model that receives an input of the first noise data and outputs (infers) the second noise data. The learning model is generated by machine learning via the learning system 20 as described later.

The learning model includes, for example, a neural network. The neural network may be a multi-layered neural network. That is, the learning model may be generated by deep learning.

The learning model is provided with a neuron for inputting the first noise data to an input layer. For example, information input to the learning model is the brightness value of each pixel of the image that is the first noise data. In this case, the input layer is provided with neurons corresponding to the number of pixels of the image, and the brightness value of the corresponding pixel is input to each neuron.

The learning model is provided with a neuron for outputting the second noise data to an output layer. For example, information output from the learning model is the brightness value of each pixel of the image that is the second noise data. In this case, the output layer is provided with neurons corresponding to the number of pixels of the image, and the brightness value of the corresponding pixel is output from each neuron.

The learning model is assumed to be used as a program module that is a portion of artificial intelligence software. The learning model is used in, for example, a computer including a processor and a memory, and the processor of the computer operates in response to an instruction from the model stored in the memory. For example, the processor of the computer operates in response to the instruction to input information to a model, perform computation in accordance with the model, and output a result from the model. Specifically, the processor of the computer operates in response to the instruction to input information to the input layer of the neural network, perform the computation based on parameters such as a weighting coefficient of learning in the neural network, and output a result from the output layer of the neural network. The learning model may be configured by other than the neural network.

The second noise generation unit 13 inputs the first noise data to the learning model and performs the computation depending on the learning model to generate the second noise data. The generated second noise data is data in which a portion of the structure included in the first noise data is removed from the first noise data, that is, data related to only noise that does not include the structure (assumed to be). Fig. 6 shows an example of an image 34 that is the second noise data generated from the image 33 that is the first noise data, and a graph 53 of a brightness value for each pixel of the image 34. The second noise generation unit 13 outputs the generated second noise data to the noise removal unit 14.

As described above, the processing via the first noise generation unit 12 and the processing via the second noise generation unit 13 may be performed by processing devices having different performances from each other. For example, the first noise generation unit 12 is implemented by a processor that can handle the image that is the noise removal target (image having the resolution thereof), and the second noise generation unit 13 is implemented by the above-described AI-dedicated chip that can handle only the quantized image.

In addition, the frequency components of the signals included in the image that is the noise removal target depend on the imaging device (for example, a magnification of a lens used in the imaging device) that has captured the image. In addition, the frequency components of the signals depend on an imaging target of the image (for example, whether the image is an image of a substrate or an image of a cell). In order to more appropriately perform the noise removal, the first noise removal processing and the learning model described above may be made in accordance with the type of the imaging device or the type of the imaging target related to the image that is the noise removal target, or a combination thereof.

The noise removal unit 14 is noise removal means for generating the data after the noise removal from the noise removal target data acquired by the acquisition unit 11 by using the second noise data generated by the second noise generation unit 13. The noise removal unit 14 may perform the inverse quantization on the second noise data generated by the second noise generation unit 13, to generate the data after the noise removal from inverse-quantized data.

The noise removal unit 14 generates data after noise removal, for example, as follows. The noise removal unit 14 receives the second noise data input from the second noise generation unit 13. The noise removal unit 14 performs the inverse quantization on the input second noise data. The inverse quantization corresponds to the quantization performed by the first noise generation unit 12, and is processing of obtaining the image having the resolution of the image that is the noise removal target data. The inverse-quantized image is an image of the noise to be removed from the noise removal target data.

The inverse quantization can be performed by a method in the related art. For example, the inverse quantization is performed by calculating the brightness value of the image after the inverse quantization from the brightness value of the image that is the second noise data, for each pixel. Specifically, the brightness value of the image after the inverse quantization is calculated by the following expression. In this example, the number and the positional relationship of the pixels are not changed before and after the inverse quantization. Fig. 6 shows an example of an image (noise image) 35 generated by performing the inverse quantization on the image 34 that is the second noise data, and a graph 54 of a brightness value for each pixel of the image 35.

[Math. 2]

$$\text{round}\left( (AIOutImage - minAI) \times \frac{maxDiff - minDiff}{maxAI - minAI} + minDiff \right)$$

The functions and variables of the above-described expression are as follows.

round(x): A function of rounding (for example, rounding off) x to a value of a brightness value (resolution) of a noise removal target.
AIOutImage: A brightness value of an image that is second noise data.
maxDiff, minDiff: A maximum value and a minimum value of a brightness value of an image of a difference that is a quantization target. These values are set in advance from an assumed size of the noise and the like such that the noise is included in the image of the difference.
maxAI, minAI: A maximum value and a minimum value of a brightness value (resolution) of an AI-dedicated chip.

The noise removal unit 14 generates an image of a difference between the image that is the noise removal target and the image after the inverse quantization, as the image after noise removal. For example, the noise removal unit 14 generates an image after noise removal in which a value obtained by subtracting a brightness value of the image after the inverse quantization from a brightness value of the image that is the noise removal target for each corresponding pixel is a brightness value of the pixel. Fig. 6 shows an example of an image 36 after the noise removal and a graph 55 of a brightness value for each pixel of the image 36.

The noise removal unit 14 outputs the generated image after noise removal. The output of the image after noise removal can be performed in the same manner as the method in the related art depending on the purpose of using the image. The functions of the noise removal system 10 according to the present embodiment are as described above.

Subsequently, the functions of the learning system 20 according to the present embodiment will be described. As shown in Fig. 1, the learning system 20 includes an acquisition unit for learning 21, a first noise generation unit for learning 22, and a learning unit 23.

The acquisition unit for learning 21 is acquisition means for learning for acquiring data for learning having a plurality of values and including noise. The acquisition unit for learning 21 acquires an image including the noise as the data for learning. The number of pixels and the resolution of an image for learning (sample image) that is the data for learning are the same as the number of pixels and the resolution of the image that is the noise removal target. The image including the noise is, for example, an image captured by the imaging device. Further, the image including the noise may be an image in which the noise is added to the image including no noise by simulation.

The image for learning may be captured by the same (same type of) imaging device as the image that is the noise removal target. In addition, the images for learning may be images in which the same (same type of) imaging target (for example, whether the image is an image of a substrate or an image of a cell) is captured. Therefore, the learning model generated by the learning system 20 can be set for each type of the imaging device, each type of the imaging target, or each combination thereof. By matching the image for learning with the image that is the noise removal target in this way and generating the learning model, it is possible to obtain a learning model that can perform more appropriate noise removal.

The acquisition unit for learning 21 acquires the image by receiving the image for learning from the imaging device, for example, similarly to the image that is the noise removal target. In addition, the acquisition unit for learning 21 may acquire the image for learning by receiving an image input operation of the user to the learning system 20. In addition, the acquisition unit for learning 21 may acquire the image by any method other than the above-described example. The acquisition unit for learning 21 acquires a sufficient number of images for learning to appropriately perform machine learning described later. The acquisition unit for learning 21 outputs the acquired image for learning to the first noise generation unit for learning 22.

The first noise generation unit for learning 22 is first noise generation means for learning for performing first noise removal processing on the data for learning acquired by the data acquisition unit for learning 21, to generate first noise data for learning related to noise to be removed by the first noise removal processing.

The first noise data for learning is obtained by roughly excluding each brightness value corresponding to a substance (that is, other than the noise) captured in the image from each brightness value of the image for learning. That is, the first noise data for learning is obtained by roughly excluding the contrast of the structure.

The first noise generation unit for learning 22 inputs the image for learning from the acquisition unit for learning 21. The first noise generation unit for learning 22 generates the first noise data for learning for each image for learning in the same manner as the generation of the first noise data from the image that is the noise removal target by the first noise generation unit 12. The first noise removal processing and the quantization used for generating the first noise data for learning are the same as the first noise removal processing and the quantization used for generating the first noise data in the noise removal system 10. The first noise generation unit for learning 22 outputs the image after the quantization, which is the generated first noise data for learning, to the learning unit 23. The first noise generation unit for learning 22 may output the non-quantized difference image to the learning unit 23.

The learning unit 23 is learning means for generating the learning model by performing the machine learning using, as an input to the learning model, the first noise data for learning generated by the first noise generation unit for learning 22.

For example, the learning unit 23 generates the learning model by performing the machine learning as follows. The learning unit 23 receives the quantized difference image, which is the first noise data for learning, input from the first noise data for learning. The learning unit 23 inputs the first noise data for learning to the learning model and performs the computation depending on the learning model to generate the second noise data for learning. The generation of the second noise data for learning is performed in the same manner as the generation of the second noise data described above. In the second noise data for learning, the noise is quantized, similarly to the second noise data described above. However, in a case in which the non-quantized image is output from the first noise generation unit for learning 22, the noise is not quantized in the second noise data for learning.

The learning unit 23 performs the inverse quantization on the second noise data for learning. The learning unit 23 generates an image of a difference between the image that is the data for learning and the image after the inverse quantization, as the image after noise removal. The methods for generating the images after the inverse quantization and the noise removal used for generating the second noise data for learning are the same as the method used for generating the second noise data and the method used for generating the image after noise removal in the noise removal system 10.

The learning unit 23 performs the machine learning, that is, updating of the parameters of the learning model by using the generated image after noise removal, corresponding to the image for learning. The machine learning itself using the image after noise removal can be performed in the same manner as a machine learning method in the related art, such as backpropagation. For example, an image corresponding to the image for learning, which does not include the noise, is acquired in advance as a training image, and the learning is performed such that an error between the generated image after noise removal and the training image is removed.

In addition, even in a case in which there is no training data, the learning can be performed in the same manner as the machine learning method in the related art. For example, the learning may be performed by Noise2Noise using a plurality of images for learning that are different only in the noise.

The learning unit 23 outputs the generated learning model to the noise removal system 10. The noise removal system 10 receives and stores the learning model input from the learning system 20 and uses the learning model for the noise removal of the image.

In general, in the generation of the learning model, the necessity of low cost and low power consumption is not high as compared with the noise removal. Therefore, the learning system 20 may be entirely implemented by a processor that can handle images that are the noise removal targets (images having the resolution thereof) without using the AI-dedicated chip. However, in the generation of the learning model, the AI-dedicated chip may be used for the computation using the learning model. The functions of the learning system 20 according to the present embodiment are as described above.

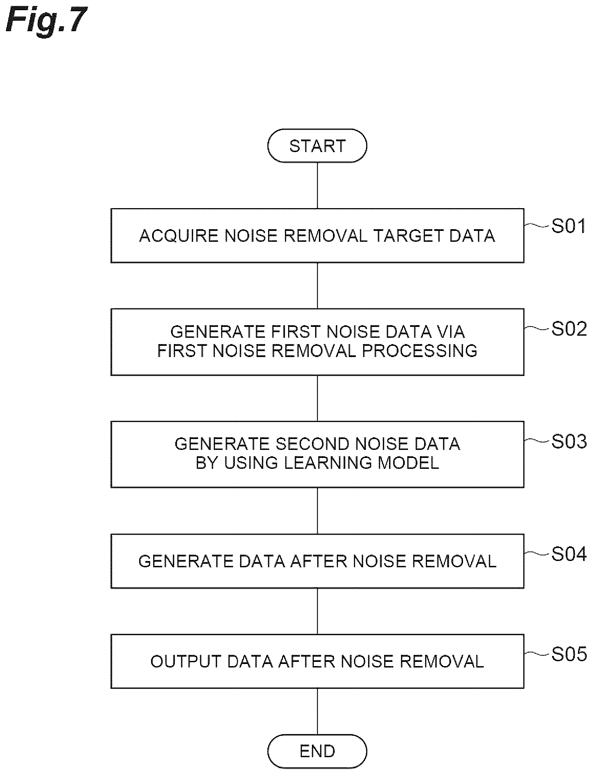

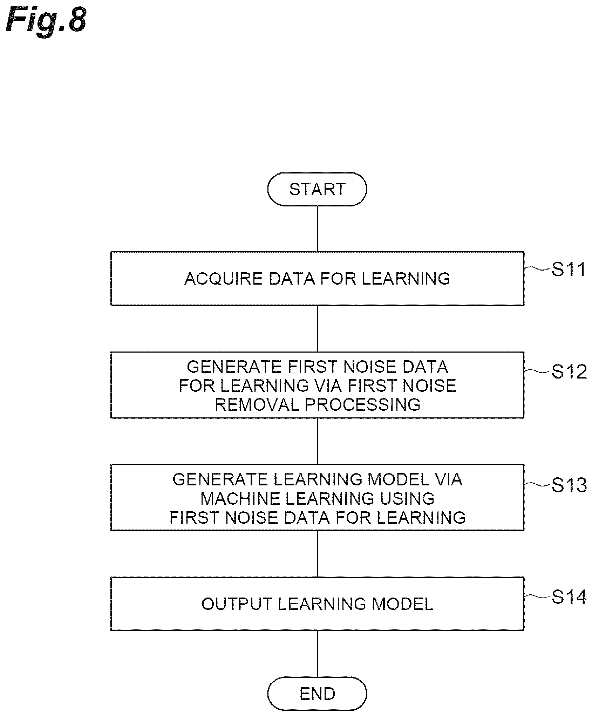

Subsequently, processing (operation method performed by the noise removal system 10 and the learning system 20) executed by the noise removal system 10 and the learning system 20 according to the present embodiment will be described with reference to flowcharts of Figs. 7 and 8.

First, a noise removal method, which is the processing executed by the noise removal system 10 according to the present embodiment, will be described with reference to the flowchart of Fig. 7. In the present processing, the noise removal target data is acquired by the acquisition unit 11 (S01, acquisition step). Subsequently, the first noise generation unit 12 performs the first noise removal processing on the noise removal target data, to generate first noise data related to the noise to be removed by the first noise removal processing (S02, first noise generation step). The first noise data is generated by performing the quantization on the data obtained by the first noise removal processing. The first noise data may be data that is not quantized with respect to the data obtained by the first noise removal processing.

Subsequently, the second noise generation unit 13 inputs the first noise data to the learning model, to generate the second noise data (S03, second noise generation step). Subsequently, the noise removal unit 14 uses the second noise data to generate data after noise removal from the noise removal target data (S04, noise removal step). The second noise data is used for generating the data after the noise removal after the inverse quantization is performed. The data after the noise removal, which is the result of the noise removal, is output from the noise removal unit 14 to a predetermined output destination (S05). The noise removal method that is the processing executed in the noise removal system 10 according to the present embodiment is as described above.

Subsequently, a learning method, which is the processing executed by the learning system 20 according to the present embodiment, will be described with reference to the flowchart of Fig. 8. In the present processing, the data for learning is acquired by the acquisition unit for learning 21 (S11, acquisition step for learning). Subsequently, the first noise generation unit for learning 22 performs the first noise removal processing on the data for learning, to generate the first noise data for learning related to the noise to be removed by the first noise removal processing (S12, first noise generation step for learning). The first noise data for learning is generated by performing the quantization on the data obtained by the first noise removal processing. The first noise data for learning may be data that is not quantized with respect to the data obtained by the first noise removal processing.

Subsequently, the learning unit 23 generates the learning model by performing the machine learning using the first noise data for learning as an input to the learning model (S13, learning step). The generated learning model is output from the learning system 20 to the noise removal system 10 (S14). In the noise removal system 10, the learning model is stored and used in the above-described processing. The learning method that is processing executed in the learning system 20 according to the present embodiment is as described above.

According to the above-described embodiment, the first noise data generated by the first noise removal processing on the image that is the noise removal target is input to the learning model to generate the second noise data, and the image after noise removal is generated by using the second noise data. As described above, the image 33 that is the first noise data is based on the image 32 of the difference in which the contrast change of the structure in the image 30 that is the noise removal target is roughly removed by the first noise removal processing. A range of the brightness value of the image 32 of the difference is usually smaller than a range of the brightness value of the image 30 that is the noise removal target. By using such an image 33 that is the first noise data, it is possible to perform the computation related to the noise removal by the learning model while suppressing the decrease of the accuracy of the brightness value. Accordingly, according to the present embodiment, it is possible to appropriately remove the noise from the data having the plurality of values, such as the image, even in a case of using the AI-dedicated chip.

In addition, as in the present embodiment, the quantization may be performed in a case of generating the first noise data, and the inverse quantization may be performed in a case of generating the data after the noise removal. With this configuration, the first noise data can be made appropriate in accordance with the computation using the learning model. For example, the first noise data can be made in accordance with the performance of the AI-dedicated chip that performs the computation using the learning model. As a result, it is possible to perform appropriate and reliable noise removal. However, in the noise removal system 10, in a case in which an image having the data size of the image that is the noise removal target can be used, it is not necessarily required to perform the quantization and the inverse quantization, and the noise removal may be performed by inputting the data before the quantization to the learning model as the first noise data.

In addition, as in the present embodiment, the processing via the first noise generation unit 12 and the processing via the second noise generation unit 13 may be performed by processing devices having different performances from each other. With this configuration, for example, the AI-dedicated chip can perform the computation using the learning model as described above. As a result, it is possible to remove the noise at low cost and with low power consumption. However, the processing via the first noise generation unit 12 and the processing via the second noise generation unit 13 may be performed by the same processing device.

In addition, as in the present embodiment, the first noise removal processing may be performed by using the filter. In addition, the first noise removal processing may be performed by removing the frequency components. With these configurations, the first noise removal processing can be appropriately and reliably performed. As a result, it is possible to perform appropriate and reliable noise removal. However, the first noise removal processing does not necessarily have to be performed as described above, and the noise removal processing need only be noise removal processing that can roughly remove the contrast change of the structure in the image that is the noise removal target.

Subsequently, modification examples of the noise removal system 10 and the learning system 20 according to the present embodiment will be described. In the above-described embodiment, the information input to the learning model corresponds to the image 32 of the difference between the image 30 that is the noise removal target and the image 31 after the first noise removal processing. Since most of the magnitude of the original brightness value of the image 30 that is the noise removal target is lost in the image 32 of the difference, the magnitude of the original brightness value of the image 30 that is the noise removal target is not sufficiently considered in the computation of the learning model.

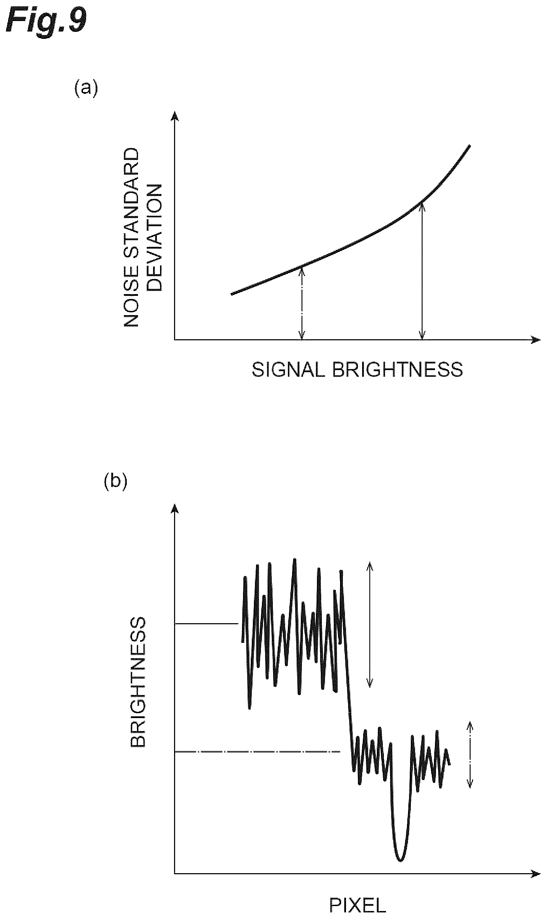

The noise included in the image is usually noise corresponding to the magnitude of the brightness value of the image. For example, (a) of Fig. 9 shows a graph showing a relationship between the brightness value of the image and a standard deviation of the noise included in the image. In (b) of Fig. 9, a graph of an example of the brightness value for each pixel is shown. In the graph of (b) of Fig. 9, a portion in which the brightness value varies in a range indicated by an arrow corresponds to the noise. As shown in these graphs, for example, the variation in the noise as indicated by the standard deviation is larger as the brightness value is larger. In addition, a distribution of the brightness values of the noise at a low brightness is a Poisson distribution, and a distribution of the brightness values of the noise at a high brightness is a Gaussian distribution, so that the distribution of the noise is different depending on the brightness value.

Therefore, by considering the magnitude of the original brightness value of the image that is the noise removal target in the computation using the learning model, more appropriate noise removal can be performed. For this purpose, the noise removal system 10 and the learning system 20 may have the following configurations.

The first noise generation unit 12 also generates data of magnitude reflecting the magnitude of the plurality of values of the noise removal target data. The second noise generation unit 13 generates the second noise data by inputting the first noise data and the data of magnitude that are generated by the first noise generation unit 12 to the learning model. Specifically, for example, the following configuration is adopted.

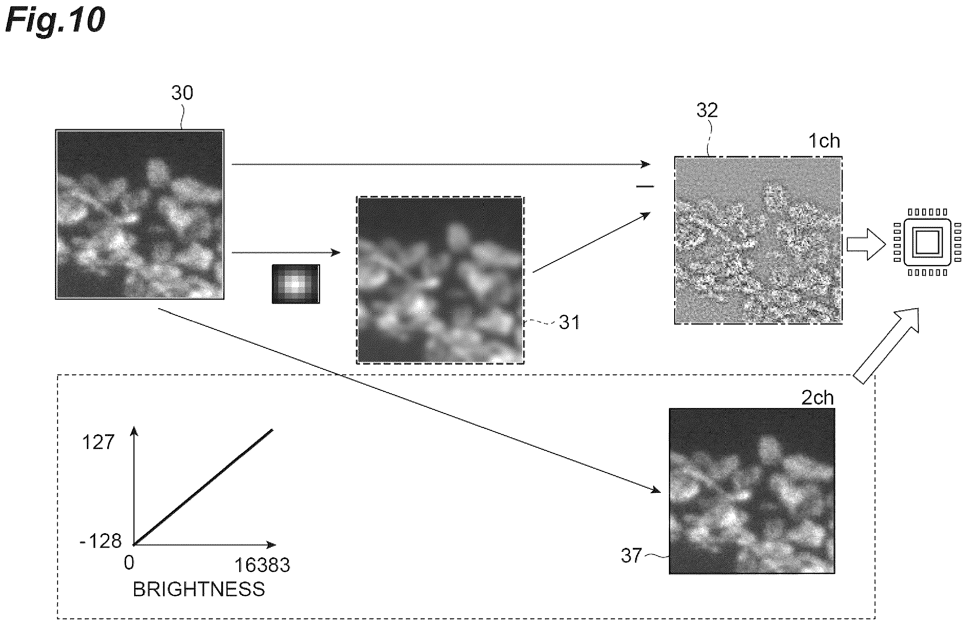

As shown in Fig. 10, the first noise generation unit 12 generates an image 37 (data of magnitude) indicating the magnitude of the brightness value of each pixel of the noise removal target data, in addition to the image 32 for generating the first noise data, from the image 30 that is the noise removal target. The first noise generation unit 12 performs the quantization on the image 30 that is the noise removal target to generate the image 37 that is the data of magnitude. For example, as shown in a graph of Fig. 10, the first noise generation unit 12 performs the quantization of linearly transforming the resolution (0 to 16383) of the brightness value of the image 30 that is the noise removal target into the resolution (-128 to 127) of the brightness value of the image of the AI-dedicated chip, to generate the image 37 that is the data of magnitude. The first noise generation unit 12 outputs the image 33 of the first noise data generated from the image 32 and the image 37 which is the data of magnitude to the second noise generation unit 13.

The second noise generation unit 13 receives the images 33 and 37 input from the first noise generation unit 12. The images 33 and 37 can be input to the learning model used in this configuration. For example, the input layer of the learning model is provided with a neuron for inputting the image 33 that is the first noise data and a neuron for inputting the image 37 that is the data of magnitude. That is, images of two channels (chs) can be input to the input layer of the learning model, and among the two chs, 1ch is the image 33 that is the first noise data, and 2ch is the image 37 that is the data of magnitude. Even in this configuration, the output from the learning model is only the second noise data.

The second noise generation unit 13 inputs the image 32 that is the first noise data and the image 37 that is the data of magnitude to the learning model and performs the computation depending on the learning model to generate the second noise data. In the noise removal system 10, the noise removal is performed in the same manner as the above-described embodiment except for the above-described configuration. The data of magnitude does not necessarily have to be the above-described data of magnitude, and need only be data of magnitude reflecting the magnitude of the brightness value of each pixel of the image that is the noise removal target. In addition, in a case in which the noise removal target data is data other than the image, the data of magnitude need only be data reflecting the magnitude of each value.

For example, the data of magnitude may be as follows. As described above, the standard deviation of the noise included in the image depends on the brightness value of the image. Therefore, instead of directly using the brightness value of the pixel as the data of magnitude as described above, the data of magnitude may be generated from the standard deviation of the noise calculated (estimated) from the brightness value of the pixel for each pixel. As shown later, the standard deviation of the noise is, for example, a value corresponding to the square root of the brightness value, has a small amount of change as compared with the brightness value accordingly, and is less susceptible to the influence of the quantization.

The first noise generation unit 12 calculates, for each pixel of the image 30 that is the noise removal target, the standard deviation of the noise from the brightness value of the pixel based on a relationship between the pixel value and the standard deviation of the noise, which are stored in advance. The relationship for calculating the standard deviation of the noise from the brightness value depends on, for example, the type of the imaging device (imaging element) that acquires the image 30 that is the noise removal target by imaging.

For example, in a case in which a visible light charge-coupled device (CCD) sensor or a visible light complementary metal-oxide-semiconductor (CMOS) sensor is used as the imaging device (imaging element), the following relational expression can be used as the above-described relationship.

[Math. 3]

$$Noise = \sqrt{\left(\sqrt{Cf \cdot Signal}\right)^2 + \left(\sqrt{D}\right)^2 + R^2}$$

The variables and the like in the above-described expression are as follows.

Noise: Standard deviation of noise (to be calculated)
Cf: Transform coefficient [photon/count]
Signal: Brightness value of pixel
D: Dark current brightness value
R: Read noise

Among the values included in the above-described relational expression, Cf, D, and R are unique values depending on the imaging device (imaging element), and values set in advance depending on the imaging device (imaging element) are used.

In addition, as the above-described relationship, a graph showing a relationship between the brightness value and the standard deviation of noise, which is calculated from the measurement using the imaging device (imaging element) that acquires the image 30 that is the noise removal target by imaging, may be used. The graph is calculated, for example, as follows. First, the imaging is performed while a strength of a light source is changed stepwise in a state in which the substance to be imaged is not present. Then, an average value and the standard deviation of the brightness value are calculated for a plurality of images captured in a state in which the strength of the light source is different, and the average value and the standard deviation are shown in a graph as a relationship between the brightness value and the standard deviation of the noise. In order to calculate the standard deviation of the noise from the brightness value, the first noise generation unit 12 may store a look-up table in which the standard deviation of the noise is assigned to the brightness value and which is created from the graph.

The first noise generation unit 12 creates an image in which the standard deviation of the noise calculated for each pixel of the image 30 that is the noise removal target is the pixel value. The first noise generation unit 12 performs the quantization on the created image to generate the image that is the data of magnitude. For example, the first noise generation unit 12 performs the quantization of linearly transforming a range from a minimum value (minimum value of the standard deviation of the noise) to a maximum value (maximum value of the standard deviation of the noise) of the pixel values of the created image into the resolution of the brightness value of the image of the AI-dedicated chip, to generate the image that is the data of magnitude. The generated data of magnitude can be used in the same manner as described above.

In the learning system 20, the first noise generation unit for learning 22 generates the image that is the data of magnitude from the image that is the data for learning, in the same manner as described above. The learning unit 23 generates the learning model by performing the machine learning using the first noise data for learning and the data of magnitude as inputs to the learning model. In the learning system 20, the learning model is generated in the same manner as the above-described embodiment except for the above-described configuration.

In the above-described configuration, by generating the data of magnitude and using the data of magnitude as the input to the learning model, the magnitude of the original brightness value of the image that is the noise removal target can be taken into account in the learning model. As a result, it is possible to perform more appropriate noise removal.

In the above-described embodiment, in a case in which the image 32 of the difference is quantized to generate the first noise data, the range (for example, maxDiff and minDiff described above) of the brightness values of the image of the difference to be quantized is set in advance. Depending on the setting of the range, there is a concern that a portion including the noise may be out of the range, or the accuracy may be decreased due to the quantization, and information to be considered by the learning model may be missing. Therefore, in consideration of the above-described points, the noise removal system 10 and the learning system 20 may have the following configurations in order to further enable appropriate noise removal.

The first noise generation unit 12 performs the quantization for each of a plurality of ranges of the magnitude of the plurality of values, to generate a plurality of first noise data. The second noise generation unit 13 generates the second noise data by inputting the plurality of first noise data generated by the first noise generation unit 12 to the learning model. Specifically, for example, the following configuration is adopted.

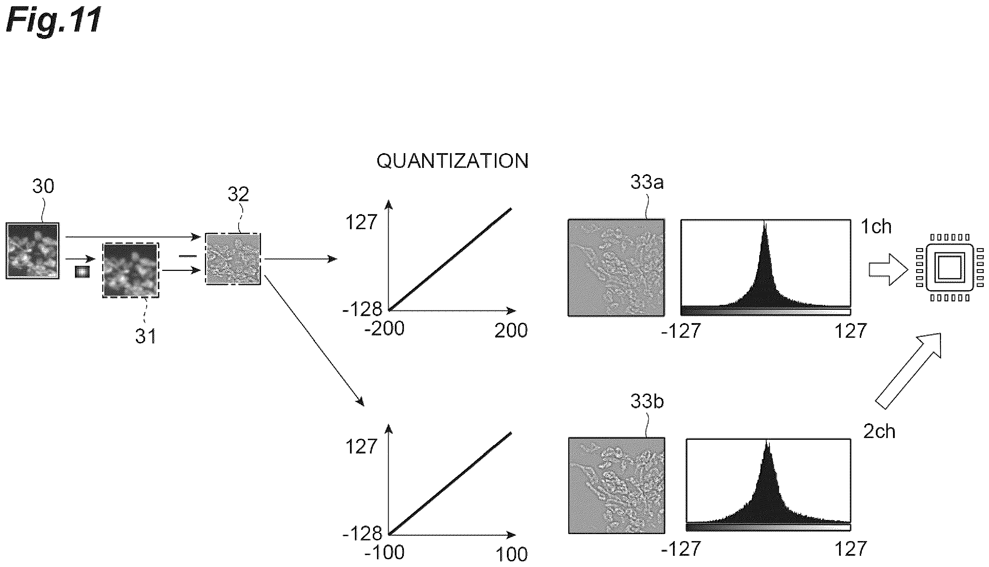

As shown in Fig. 11, the first noise generation unit 12 generates images 33a and 33b that are the plurality of first noise data by performing the quantization for each range of different brightness values from the image 32 (image 32 of the difference between the image 30 that is the noise removal target and the image 31 after the first noise removal processing) for generating the first noise data. The range of the brightness value is set in advance for each of the images 33a and 33b that are the first noise data generated. For example, in the example shown in Fig. 11, the first noise generation unit 12 generates the image 33a from a range of the brightness value of -200 to 200 in the image 32 of the difference and generates the image 33b from a range of the brightness value of -100 to 100 in the image 32 of the difference.

Graphs shown on the right side of each of the images 33a and 33b in Fig. 11 are histograms for each brightness value of the images 33a and 33b. The image 33a has a relatively wide brightness value and relatively low accuracy, while the image 33b has a relatively narrow brightness value and relatively high accuracy. The first noise generation unit 12 outputs the images 33a and 33b, which are the generated plurality of first noise data, to the second noise generation unit 13.

The second noise generation unit 13 receives the images 33a and 33b, which are the plurality of first noise data, input from the first noise generation unit 12. The images 33a and 33b can be input to the learning model used in this configuration. For example, the input layer of the learning model is provided with a neuron for inputting the image 33a that is the one first noise data and a neuron for inputting the image 33b that is the other first noise data. That is, images of two channels (chs) can be input to the input layer of the learning model, and among the two chs, 1ch is the image 33a that is one first noise data, and 2ch is the image 33b that is the other first noise data. Even in this configuration, the output from the learning model is only one second noise data.

The second noise generation unit 13 inputs the images 33a and 33b, which are the plurality of first noise data, to the learning model and performs the computation depending on the learning model to generate the second noise data. In the noise removal system 10, the noise removal is performed in the same manner as the above-described embodiment except for the above-described configuration.

In the learning system 20, the first noise generation unit for learning 22 generates images, which are a plurality of first noise data for learning, from the image for generating the first noise data for learning, in the same manner as described above. The learning unit 23 generates the learning model by performing the machine learning using the images, which are the plurality of first noise data for learning, as the inputs to the learning model. In the learning system 20, the learning model is generated in the same manner as the above-described embodiment except for the above-described configuration.

By generating the images that are the plurality of first noise data as described above, it is possible to prevent the portion including the noise from being out of the range or the accuracy from being decreased due to the quantization. The ranges of the brightness value for generating the images that are the plurality of first noise data are set so that the above can be achieved. For example, as shown in Fig. 11, the image 33a after the quantization that covers a wide range of the brightness value and the image 33b after the quantization that has a narrow range but has high accuracy are generated. In addition, in the example shown in Fig. 11, one range of the brightness value includes the other range of the brightness value, but may be a range other than the range. In addition, although the example of generating the images of two first noise data is shown above, images of three or more first noise data may be generated by setting three or more ranges of the brightness value.

With the above-described configuration, it is possible to perform more appropriate noise removal in consideration of the images of the plurality of first noise data. In addition, the second noise data may be generated by using both the above-described data of magnitude and the plurality of first noise data as the inputs to the learning model.

In the present embodiment, in order to perform more appropriate noise removal, it is ideal that the image 32 (image 32 of the difference between the image 30 that is the noise removal target and the image 31 after the first noise removal processing) for generating the first noise data obtained by the first noise removal processing includes only noise as much as possible.

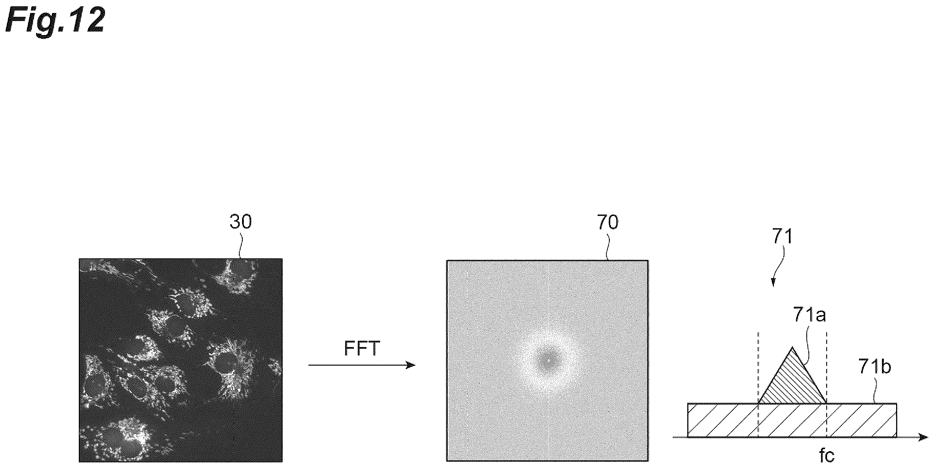

Fig. 12 shows a spectral image 70 showing frequency components obtained by performing the FFT on the image 30 that is the noise removal target, and a graph 71 corresponding to the spectral image 70. In the spectral image 70 and the graph 71, the frequency is lower as a distance from the center is shorter (the center is a frequency of 0), and the frequency is higher as the distance from the center is longer. In the graph 71 of Fig. 12, a horizontal axis indicates a frequency, and a vertical axis indicates frequency components. As schematically shown in the graph 71 of Fig. 12, a signal spectrum 71a of a signal portion (portion excluding the noise) of the image 30 substantially has only frequency components of the frequency equal to or lower than a cutoff frequency fc, which is a certain frequency. On the other hand, a noise spectrum 71b of a noise portion of the image 30 has uniform frequency components regardless of the frequency.

By setting the image 32 for generating the first noise data obtained by the first noise removal processing to exclude the frequency components equal to or higher than the cutoff frequency fc, it is possible to make the image closer to the above-described ideal image. In consideration of this, an appropriate method of the first noise removal processing may be determined at the time of generating the learning model. For that purpose, the learning system 20 may have the following configuration.

The first noise generation unit for learning 22 may determine the method of the first noise removal processing based on the frequency components acquired by the acquisition unit for learning 21. Specifically, for example, the following configuration is adopted.

The method of the first noise removal processing via the first noise generation unit for learning 22 is determined, for example, as follows. In a case in which the above-described filter is used in the first noise removal processing, a plurality of filters (filter group) are prepared in advance, and the most suitable filter from the above-described viewpoint is selected from among the plurality of filters as the filter to be used in the first noise removal processing. The plurality of filters may include different types of filters (average filter, Gaussian filter, median filter, bilateral filter, and the like). The plurality of filters may include filters having different filter sizes. The plurality of filters may include filters having different standard deviations. The standard deviation is a standard deviation of a Gaussian distribution in a case in which the Gaussian filter is used.

In a case in which the frequency components are generated by performing a fast Fourier transform (FFT), a wavelet transform, or the like as the first noise removal processing, a threshold value related to the frequency component removal is determined. However, the method of the first noise removal processing via the first noise generation unit for learning 22 may be determined as any method as long as the method is performed using the frequency components of the data for learning.

In addition, as described above, the first noise removal processing may be performed depending on the type of the imaging device or the type of the imaging target related to the image that is the noise removal target, or a combination thereof. Therefore, as described in the description of the generation of the learning model, the image for learning used for the determination of the first noise removal processing may be for each type of the imaging device, for each type of the imaging target, or for each combination thereof. For example, the determination of the first noise removal processing and the generation of the learning model can be performed for each of images for learning of cell images with 20 times magnification of the lens of the imaging device (image group 1), images for learning of cell images with 40 times magnification of the lens of the imaging device (image group 2), images for learning of substrate images with 20 times magnification of the lens of the imaging device (image group 3), and images for learning of substrate images with 40 times magnification of the lens of the imaging device (image group 4), and, in a case in which the noise removal is performed, the first noise removal processing and the learning model depending on the image that is the noise removal target can be used.

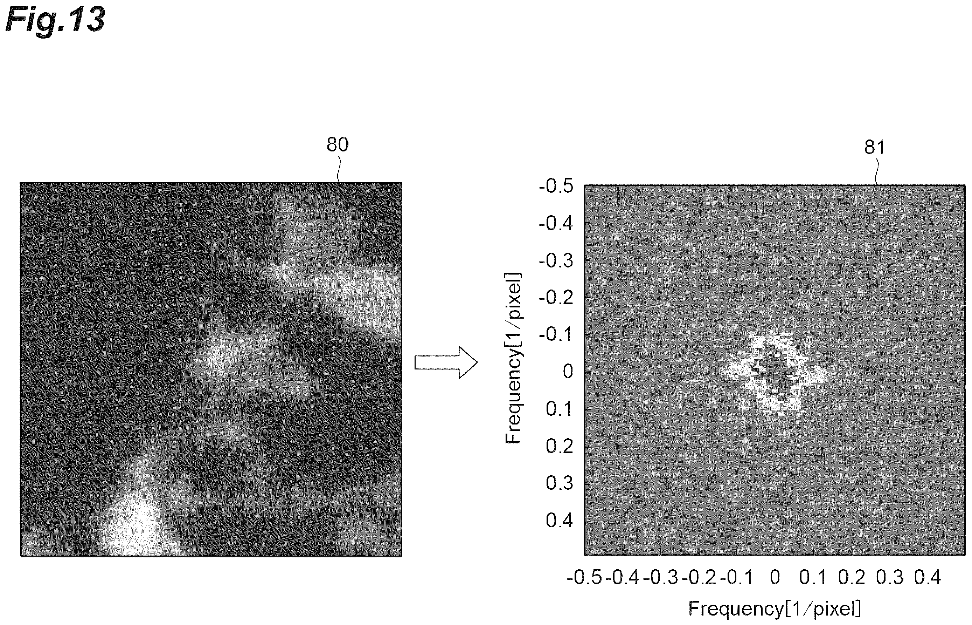

The first noise generation unit for learning 22 determines the method of the first noise removal processing, for example, as follows. The first noise generation unit for learning 22 performs the FFT or the like on each image for learning to generate the frequency components of the image and calculate the spectral image. Fig. 13 shows an example of an image for learning 80 and an example of a spectral image 81. The spectral image 81 calculated here has a lower frequency as a distance from the center is shorter (the center is a frequency of 0) and has a higher frequency as the distance from the center is longer. In order to reduce an influence of an image edge of the image for learning, the first noise generation unit for learning 22 may multiply the image for learning by a window function (Hanning window) before the generation of the frequency components such as the FFT.

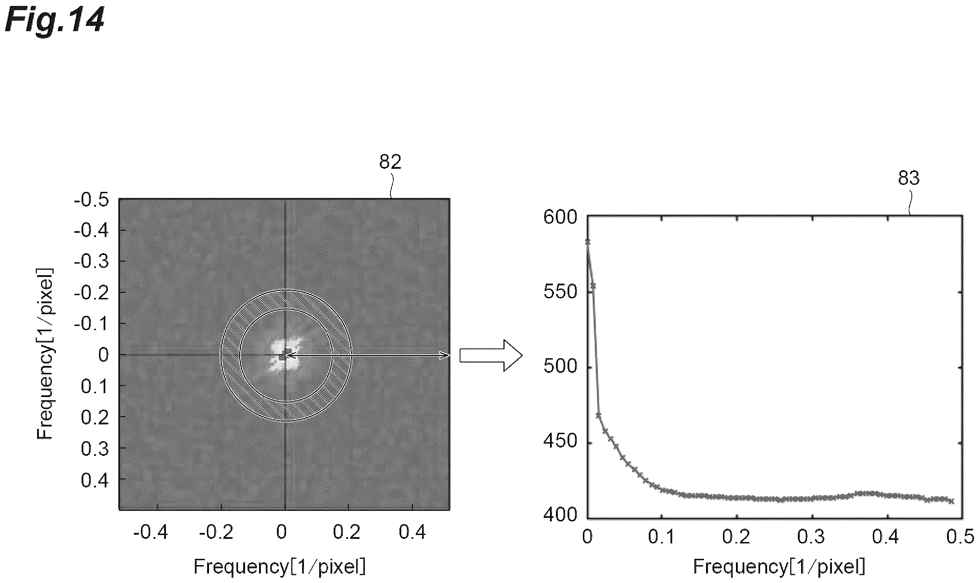

The first noise generation unit for learning 22 calculates an average image of the spectral images calculated for each image for learning. Fig. 14 shows an example of an average image 82. The first noise generation unit for learning 22 calculates frequency components for each frequency that is not dependent on the direction in the spectral image by averaging the intensities of the frequency components (0 to $2\pi$ (360°) from the center) in each direction from the center of the average image for each frequency. A right side direction, which is one of the directions, is indicated by an arrow in the average image 82 of Fig. 14. In addition, Fig. 14 shows an example of a graph 83 of the frequency components for each calculated frequency.

The first noise generation unit for learning 22 calculates a maximum frequency of the signal spectrum to be extracted from the calculated frequency components. The maximum frequency of the signal spectrum is the cutoff frequency fc (target value) shown in the graph 71 of Fig. 12.

For example, the first noise generation unit for learning 22 calculates the cutoff frequency fc as follows. The first noise generation unit for learning 22 calculates a change rate for each frequency of the calculated frequency components. The change rate at a certain frequency is a value calculated by (intensity of frequency component at certain frequency - intensity of frequency component at previous frequency)/intensity of frequency component at previous frequency. An interval of the frequency between a certain frequency and a previous frequency is set in advance. For example, the interval is a minimum interval of the frequency in the data of the frequency components.

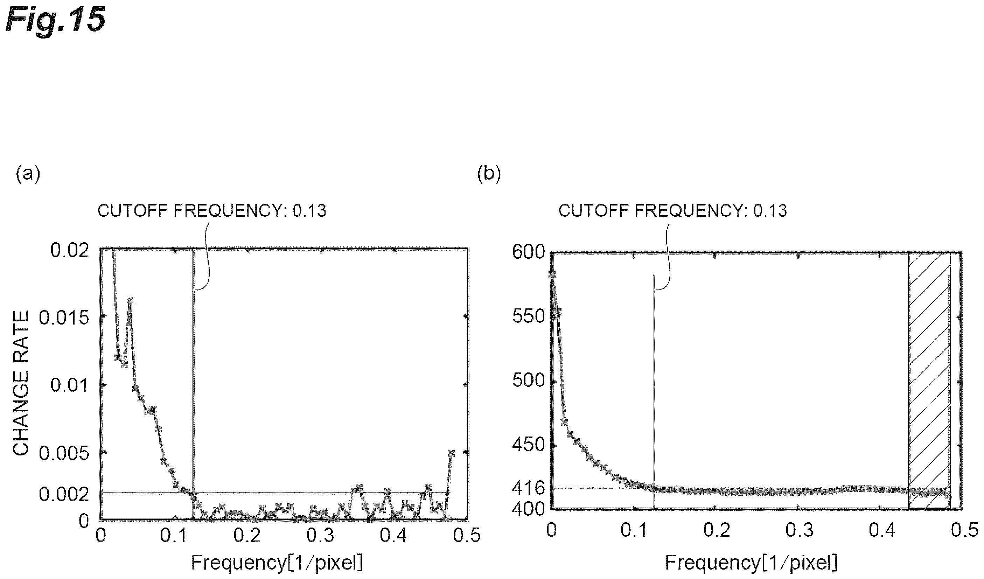

The first noise generation unit for learning 22 specifies the frequencies whose calculated change rates of the frequency components are equal to or less than the preset threshold value, and sets the minimum frequency among these frequencies as the cutoff frequency fc. The threshold value is, for example, 0.002. The threshold value can be changed. In a case in which the threshold value is increased, signal components included in the image 32 of the difference is likely to be increased, and in a case in which the threshold value is decreased, noise near the signal is less likely to be included in the image 32 of the difference. A graph of an example of the change rate per frequency of the frequency components to be calculated is shown in (a) of Fig. 15. In this example, the cutoff frequency fc is 0.13.

In addition, the first noise generation unit for learning 22 may calculate the cutoff frequency fc as follows. The high frequency almost does not include a signal component. Therefore, the average value of the intensities of the frequency components having the frequency of 90% to 100% in the frequency range in which the frequency components are calculated is assumed as the intensity of the noise spectrum. The first noise generation unit for learning 22 calculates the average value of the intensities of the frequency components in the preset frequency range (90% to 100% in the above-described example) of the noise spectrum. The first noise generation unit for learning 22 calculates a value obtained by multiplying the calculated average value by a preset multiple greater than 1, and sets the maximum frequency as the cutoff frequency fc at which the intensity of the frequency component is equal to or less than the calculated value. The above-described multiple is, for example, 1.008.

The above-described preset frequency range of the noise spectrum can be changed. Although the value of the average value is more likely to be stable as the range is widened, such as 70% to 100% or 60% to 100%, the probability of mixing the signal spectrum is increased. The above-described multiple can also be changed. In a case in which the multiple is increased, signal components included in the image 32 of the difference is likely to be increased, and in a case in which the multiple is decreased, noise near the signal is less likely to be included in the image 32 of the difference. A graph of an example of the frequency components to be calculated is shown in (b) of Fig. 15. In this example, the preset frequency range of the noise spectrum is 90% to 100% (range indicated by hatching). The average value of the intensities of the noise spectrum frequency components is 413. The preset multiple is 1.008, and the product of the average value and the multiple is 416. Based on these, the cutoff frequency fc is 0.13 in this example.

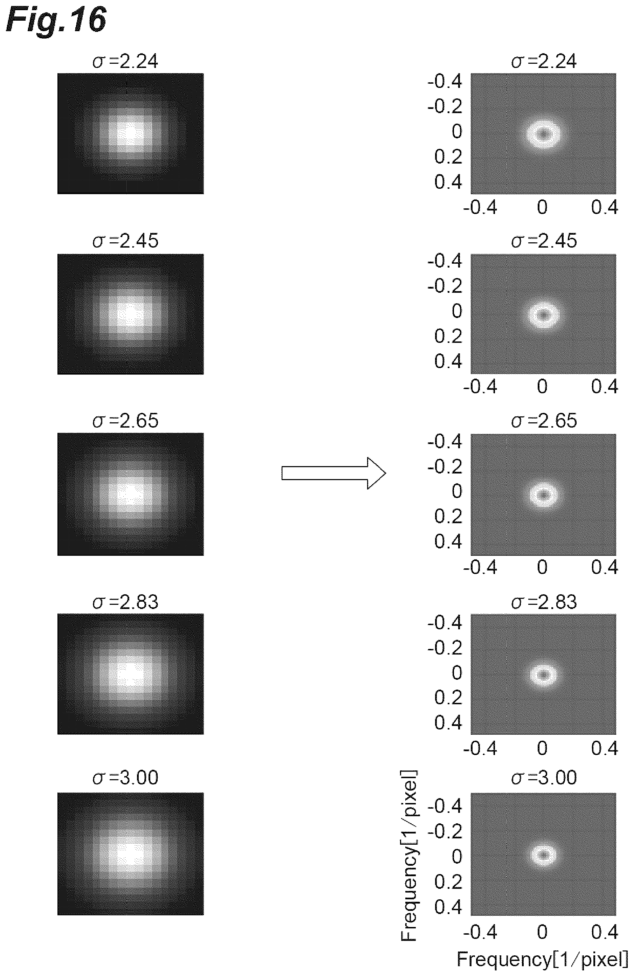

The first noise generation unit for learning 22 determines the method of the first noise removal processing based on the calculated cutoff frequency. For example, in a case in which the filter described above is used for the first noise removal processing, the filter used for the first noise removal processing is determined as follows. The first noise generation unit for learning 22 stores the filter group as candidates to be used for the first noise removal processing in advance. As described above, the filters included in the filter group have different standard deviations of the weights of the filters from each other. Examples of the filters included in the filter group as the candidates to be used in the first noise removal processing is shown on the left side of Fig. 16. A value of $\sigma$ in the drawing is the standard deviation corresponding to the filter.

The first noise generation unit for learning 22 performs the FFT or the like on each filter to generate the frequency components of the image and calculates the spectral image, similarly to the processing on each image for learning. Examples of the spectral images corresponding to the respective filters are shown on the right side of Fig. 16. In this case, in order to match the frequency resolution with the image for learning before the generation of the frequency components such as the FFT, the first noise generation unit for learning 22 may perform zero padding on each filter.

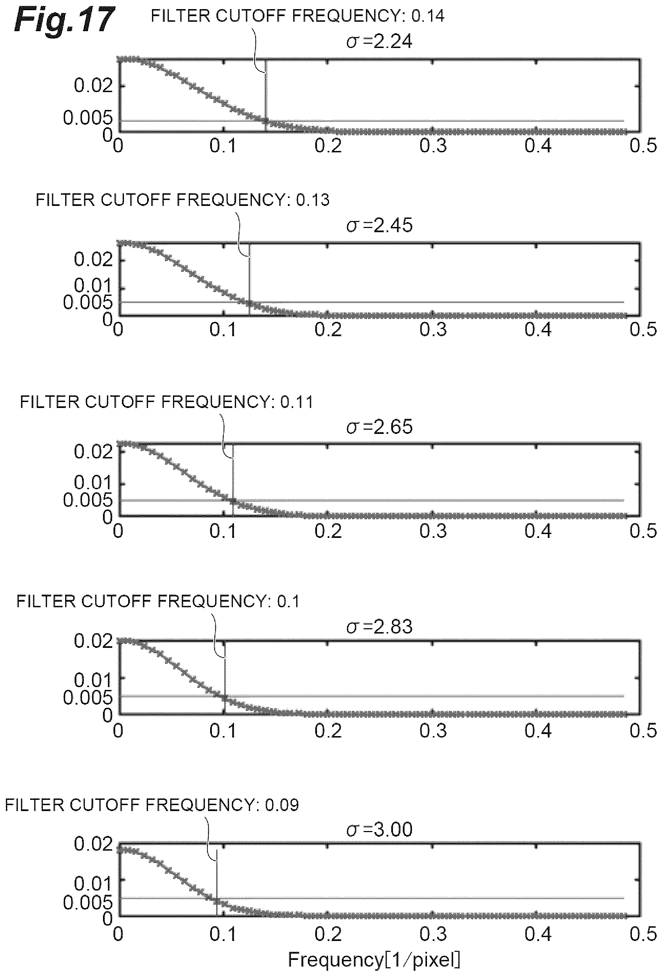

The first noise generation unit for learning 22 calculates the frequency components for each frequency that is not dependent on the direction from the spectral images of each filter, similarly to the processing for the average image of the spectral images calculated for each image for learning. Fig. 17 shows an example of a graph of the frequency components for each frequency corresponding to each filter.

The first noise generation unit for learning 22 calculates a filter cutoff frequency, which is the frequency at which the filter cuts the signal, from the calculated frequency components for each filter. For example, the first noise generation unit for learning 22 calculates the change rate for each frequency of the calculated frequency components to calculate the filter cutoff frequency, similarly to the processing using the frequency components of the image for learning.

The first noise generation unit for learning 22 sets the maximum frequency of the frequency components, which have the intensity equal to or less than the preset threshold value, as the filter cutoff frequency. The threshold value is, for example, 0.005. The threshold value can be changed. In a case in which the threshold value is increased, signal components included in the image 32 of the difference is likely to be increased, and in a case in which the threshold value is decreased, noise near the signal is less likely to be included in the image 32 of the difference. Since the filter does not include the noise, the method of calculating the cutoff frequency by assuming the frequency range of the noise spectrum as described above cannot be used.

Fig. 17 shows an example of the filter cutoff frequency for each filter calculated by this method. In this example, the filter cutoff frequency is 0.14 for the filter with $\sigma = 2.24$, 0.13 for the filter with $\sigma = 2.45$, 0.11 for the filter with $\sigma = 2.65$, 0.1 for the filter with $\sigma = 2.83$, and 0.09 for the filter with $\sigma = 3.00$.

The first noise generation unit for learning 22 compares the cutoff frequency fc calculated from the image for learning with the filter cutoff frequency for each filter, and determines (selects) the filter having the filter cutoff frequency closest to the cutoff frequency fc as the filter to be used in the first noise removal processing. For example, in a case in which the cutoff frequency fc shown in Fig. 15 is 0.13, the filter having the filter cutoff frequency of 0.13 and $\sigma = 2.45$ among the filters shown in Fig. 17 is used as the filter used in the first noise removal processing.

In addition, for example, in a case in which the first noise removal processing is performed by performing the fast Fourier transform (FFT), the wavelet transform, or the like to generate the frequency components, the first noise generation unit for learning 22 sets the cutoff frequency fc calculated from the image for learning as the threshold value related to the removal of the frequency components. The function of determining the method of the first noise removal processing of the first noise generation unit for learning 22 is as described above.

In a case of an aspect in which the method of the first noise removal processing is determined, the first noise generation unit for learning 22 performs the first noise removal processing by using the determined method, to generate the first noise data for learning. In addition, the noise removal system 10 is also notified of the method of the determined first noise removal processing, and the method of the determined first noise removal processing is also used in the first noise removal processing in the noise removal system 10.

By determining the method of the first noise removal processing as described above, the first noise removal processing can be performed by an appropriate method of making the image 32, which is for generating the first noise data, the ideal image. As a result, it is possible to perform more appropriate noise removal.

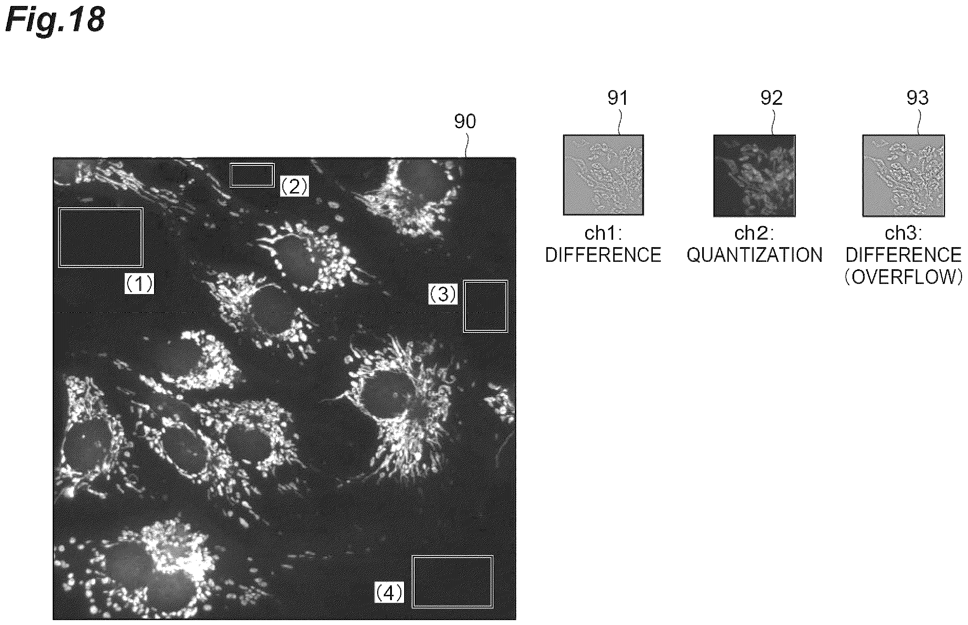

Subsequently, Example of the noise removal according to the present embodiment will be described. Fig. 18 shows an image 90 that is the noise removal target used in Example. Fig. 18 shows images 91, 92, and 93 input to the learning model. The image 91 is an image input to the 1ch of the learning model, and is an image obtained by quantizing an image of a difference between the image 90 that is the noise removal target and the image after the first noise removal processing. The image 92 is an image input to the 2ch of the learning model and is an image obtained by quantizing the image 90 that is the noise removal target. The image 93 is an image input to the 3ch of the learning model, and is an image obtained by quantizing the image of the difference between the image 90 that is the noise removal target and the image after the first noise removal processing.

The quantization for generating the image 91 is quantization (normal normalization) performed in a range in which the brightness value of the image of the difference does not overflow and underflow. The quantization for generating the image 93 is quantization performed in a range in which the overflow of the brightness value of a portion of the image of the difference is allowed. The quantization for generating the image 93 is for accurately inputting the noise component to the learning model in a case in which the range of the brightness value of the image of the difference cannot be expressed in the accuracy of the quantization for generating the image 91.

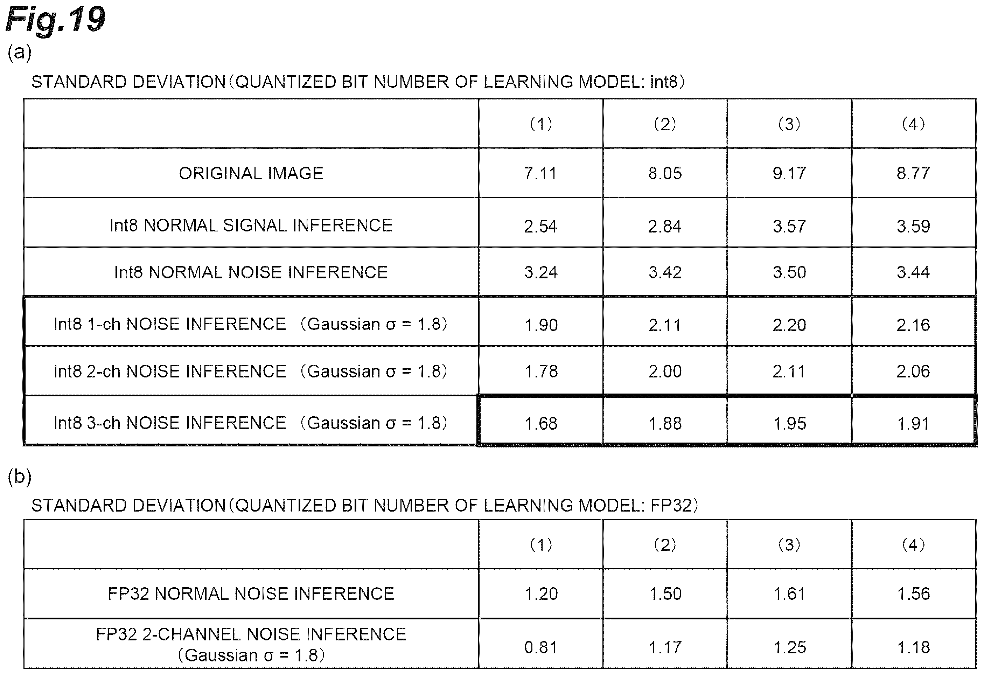

In (a) of Fig. 19, the standard deviation of the brightness value for each portion of the image is shown. The portion of the image is a rectangular portion indicated by parentheses in the image 90 that is the noise removal target in Fig. 18. In Example and Comparative Example, the resolution of the image 90 that is the noise removal target is 32-bit floating point (FP32), and the resolution of the image input to the learning model is a quantized 8-bit integer (Int8). In a table of (a) of Fig. 19, the numerical values in parentheses correspond to the respective portions. The "original image" in (a) of Fig. 19 is the image 90 that is the noise removal target. The "Int8 normal signal inference" is an inference of the image after the noise removal by using the learning model by quantizing the image 90 that is the noise removal target. The "Int8 normal noise inference" is an inference of the noise by using the learning model by quantizing the image 90 that is the noise removal target. The "Int8 normal signal inference" and the "Int8 normal noise inference" are Comparative Examples for comparison with the present embodiment.

The "Int8 1-ch noise inference (Gaussian $\sigma$ = 1.8)" is noise removal according to the present embodiment, in which the image 91 of the 1ch is used as the input to the learning model. In this example, the Gaussian filter having $\sigma$ = 1.8 is used for the first noise removal processing. The same applies to the following description. The "Int8 2-ch noise inference (Gaussian $\sigma$ = 1.8)" is noise removal according to the present embodiment, in which the image 91 of the 1ch and the image 92 of the 2ch are used as the inputs to the learning model. The "Int8 3-ch noise inference (Gaussian $\sigma$ = 1.8)" is noise removal according to the present embodiment, in which the image 91 of the 1ch, the image 92 of the 2ch, and the image 93 of the 3ch are used as the inputs to the learning model.

In the table of (a) of Fig. 19, less noise is included as the standard deviation is smaller. As shown in this table, the noise removal according to the present embodiment is more appropriately performed than in a case in which the noise is simply removed by quantizing the image 90 that is the noise removal target. In addition, by inputting a large number of images to the learning model, the noise removal can be performed more appropriately. The image after the noise removal obtained by the "Int8 normal signal inference" is not acceptable as the image quality because the decrease of the gradation due to the quantization is large.

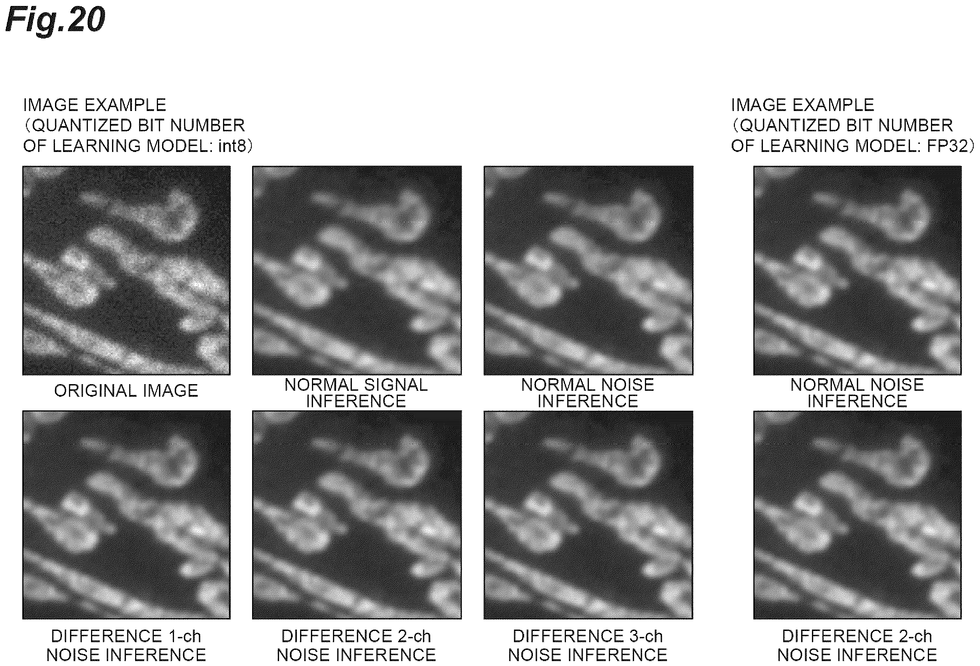

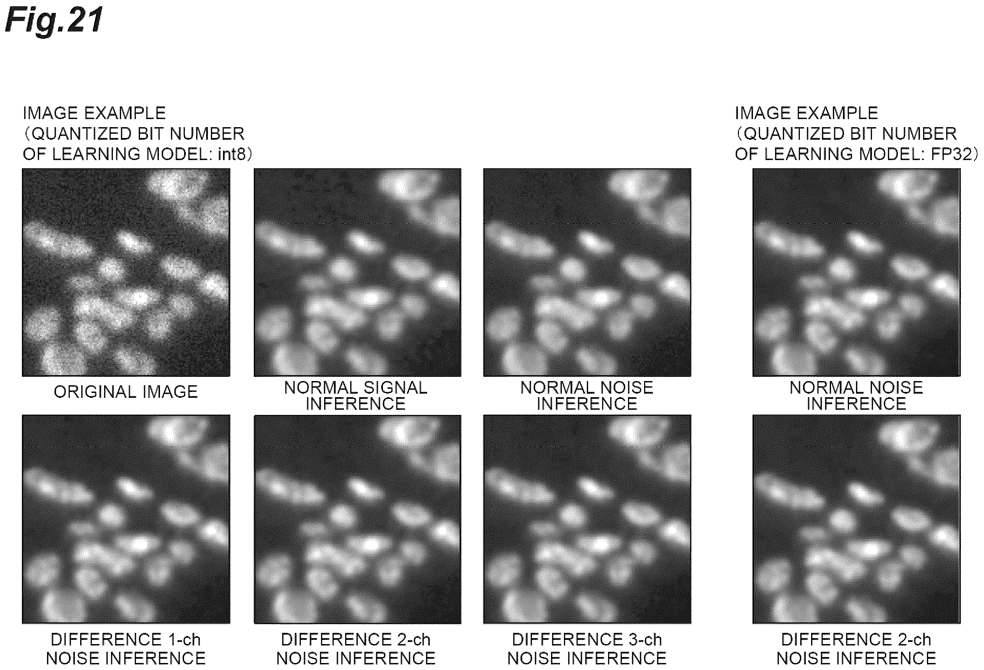

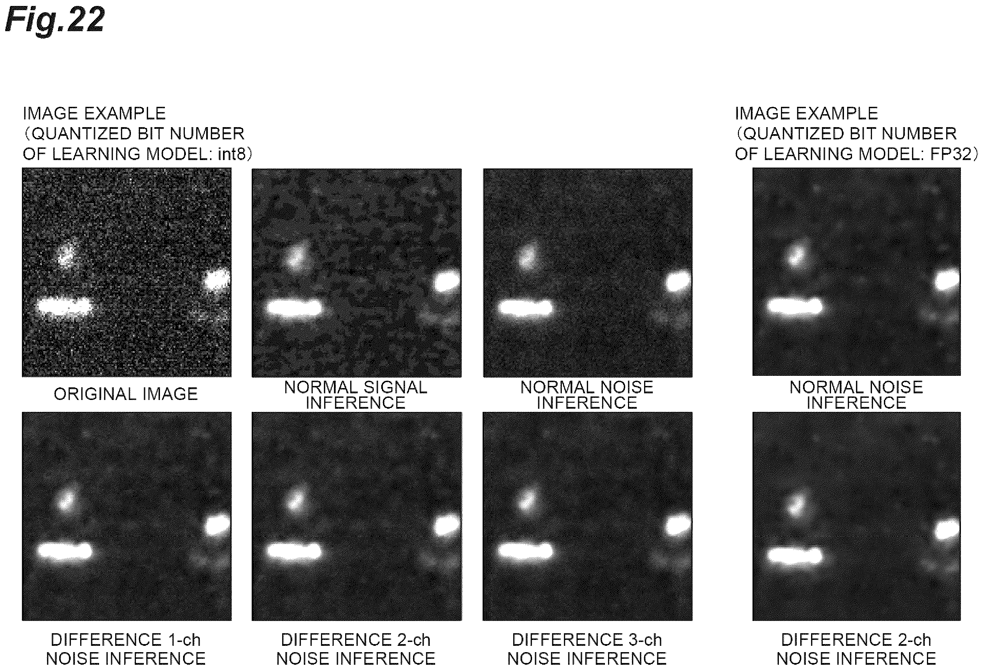

In (b) of Fig. 19, the standard deviation of the brightness value for each portion of the image is shown. In Example and the Comparative Example, the resolution of the image 90 that is the noise removal target and the resolution of the image input to the learning model are both 32-bit floating point (FP32). That is, the image input to the learning model is an image that is not quantized. In (b) of Fig. 19, the "FP32 normal noise inference" is an inference of the noise from the image 90 that is the noise removal target by using the learning model. The "FP32 2-channel noise inference (Gaussian $\sigma$ = 1.8)" is noise removal according to the present embodiment, in which the images before the quantization of the image 91 of the 1ch and the image 92 of the 2ch are used as the inputs to the learning model. As shown in this table, even in a case in which the quantization is not performed, the noise is more appropriately removed in the noise removal according to the present embodiment. Figs. 20 to 22 show examples of other images corresponding to the respective cases shown in the table of Fig. 19.

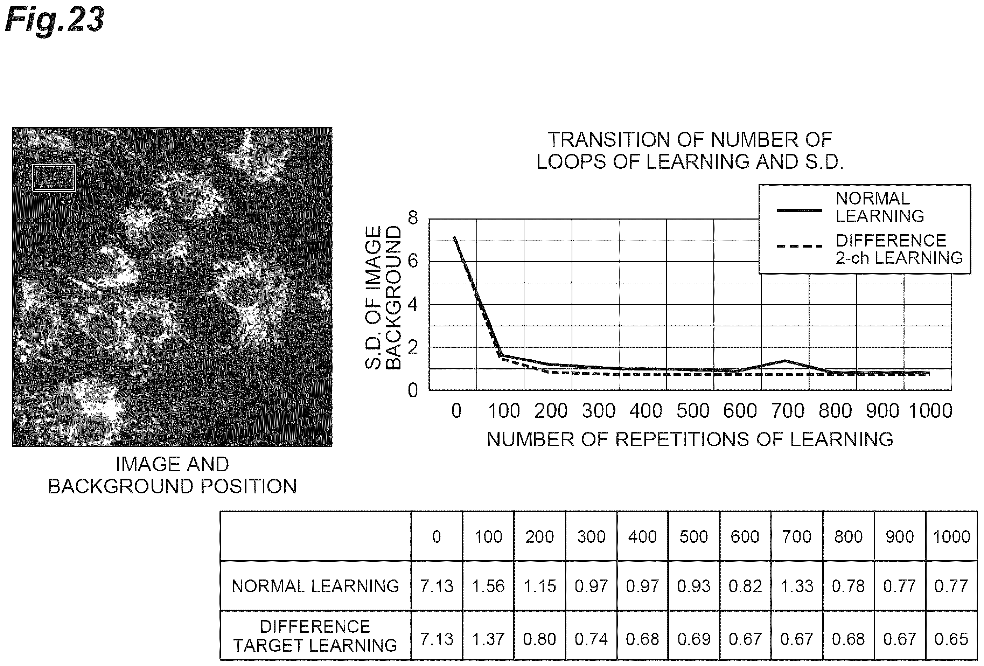

In addition, in a case in which the learning model is generated without performing the quantization of the image without assuming the use of the AI-dedicated chip, the improvement in speed is observed. In a case in which the noise removal is performed using the image shown in Fig. 23 and the learning model for each repetition number of times of the machine learning, the standard deviations of the portion of the image (portion indicated by a rectangle of the image in Fig. 23) are shown in a graph and a table of Fig. 23. The "normal learning" shown in Fig. 23 is to generate a learning model that infers the noise from the image that is the noise removal target. The "difference 2-channel learning" is to generate a learning model that infers the noise from the images before the quantization of the image 91 of the 1ch and the image 92 of the 2ch. As shown in this table, the "difference 2-ch learning" can appropriately remove the noise with a smaller number of learning times.

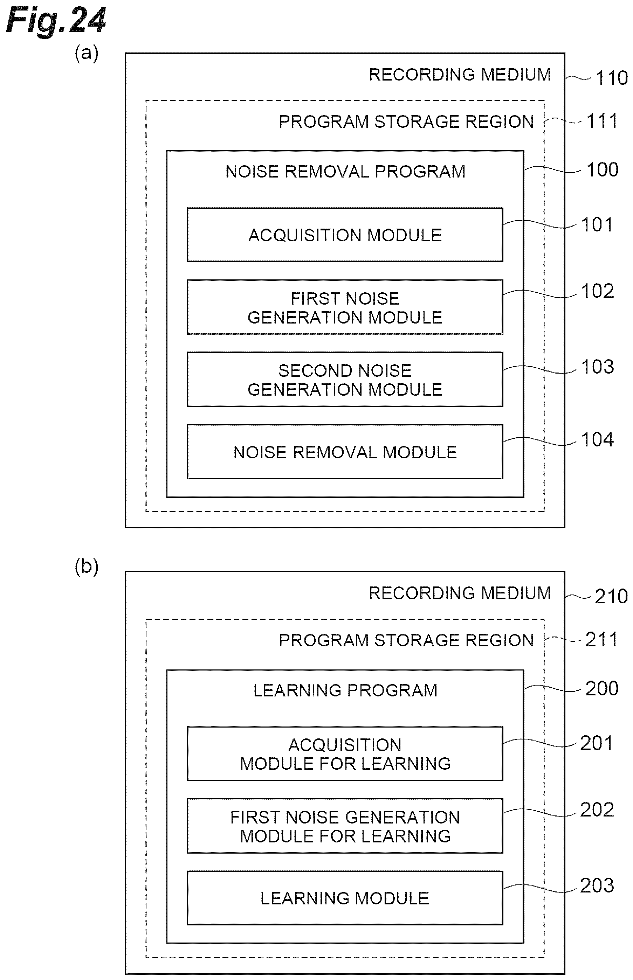

Subsequently, a noise removal program and a learning program for executing the series of processing via the noise removal system 10 and the learning system 20 described above will be described. As shown in (a) of Fig. 24, a noise removal program 100 is stored in a program storage region 111 formed in a computer-readable recording medium 110 that is inserted into and accessed by the computer or that is provided in the computer. The recording medium 110 may be a non-transitory recording medium.

The noise removal program 100 includes an acquisition module 101, a first noise generation module 102, a second noise generation module 103, and a noise removal module 104. The functions implemented by executing the acquisition module 101, the first noise generation module 102, the second noise generation module 103, and the noise removal module 104 are the same as the functions of the acquisition unit 11, the first noise generation unit 12, the second noise generation unit 13, and the noise removal unit 14 of the noise removal system 10 described above.

As shown in (b) of Fig. 24, a learning program 200 is stored in a program storage region 211 formed in a computer-readable recording medium 210 that is inserted into and accessed by the computer or that is provided in the computer. The recording medium 210 may be a non-transitory recording medium. In a case in which the noise removal program 100 and the learning program 200 are executed on the same computer, the recording medium 210 may be the same as the recording medium 110.

The learning program 200 includes an acquisition module for learning 201, a first noise generation module for learning 202, and a learning module 203. The functions implemented by executing the acquisition module for learning 201, the first noise generation module for learning 202, and the learning module 203 are the same as the functions of the acquisition unit for learning 21, the first noise generation unit for learning 22, and the learning unit 23 of the learning system 20 described above.

The noise removal program 100 and the learning program 200 may be configured such that a portion or all of the noise removal program 100 and the learning program 200 are transmitted through a transmission medium such as a communication line, received by another device, and recorded (including installation). In addition, each module of the noise removal program 100 and the learning program 200 may be installed on any of the plurality of computers, instead of one computer. In this case, the above-described series of processing is performed by the computer system including the plurality of computers.

The noise removal method, the noise removal program, the noise removal system, and the learning method according to the present disclosure have the following configurations.

[1] A noise removal method for removing noise from data having a plurality of values, the noise removal method including: an acquisition step of acquiring noise removal target data that has a plurality of values and that is a noise removal target; a first noise generation step of performing first noise removal processing on the noise removal target data acquired in the acquisition step, to generate first noise data related to noise to be removed by the first noise removal processing; a second noise generation step of inputting the first noise data generated in the first noise generation step to a learning model generated in advance by machine learning for generating second noise data related to noise to be removed from the noise removal target data from the first noise data, to generate the second noise data; and a noise removal step of using the second noise data generated in the second noise generation step, to generate data after noise removal from the noise removal target data acquired in the acquisition step.

[2] The noise removal method according to [1], in which, in the first noise generation step, quantization is performed on data obtained by the first noise removal processing, to generate the first noise data, and, in the noise removal step, inverse quantization is performed on the second noise data generated in the second noise generation step, to generate the data after the noise removal from inverse-quantized data.

[3] The noise removal method according to [2], in which, in the first noise generation step, the quantization is performed for each of a plurality of ranges of magnitude of the plurality of values, to generate a plurality of the first noise data, and, in the second noise generation step, the plurality of first noise data generated in the first noise generation step are input to the learning model, to generate the second noise data.

[4] The noise removal method according to any one of [1] to [3], in which processing via the first noise generation step and the second noise generation step are performed by processing devices having different performances from each other.

[5] The noise removal method according to any one of [1] to [4], in which, in the first noise generation step, a preset filter for performing the first noise removal processing is applied to the noise removal target data as the first noise removal processing, to generate the first noise data.

[6] The noise removal method according to any one of [1] to [5], in which, in the first noise generation step, processing of removing frequency components in a preset range is performed on the noise removal target data as the first noise removal processing, to generate the first noise data.

[7] The noise removal method according to any one of [1] to [6], in which, in the first noise generation step, data of magnitude reflecting magnitude of the plurality of values of the noise removal target data is also generated, and, in the second noise generation step, the first noise data and the data of magnitude that are generated in the first noise generation step are input to the learning model, to generate the second noise data.

[8] The noise removal method according to any one of [1] to [7], in which the noise removal target data is an image, spectral data, or time-series data.

[9] A noise removal program for removing noise from data having a plurality of values, the noise removal program causing a computer to function as: acquisition means for acquiring noise removal target data that has a plurality of values and that is a noise removal target; first noise generation means for performing first noise removal processing on the noise removal target data acquired in the acquisition means, to generate first noise data related to noise to be removed by the first noise removal processing; second noise generation means for inputting the first noise data generated in the first noise generation means to a learning model generated in advance by machine learning for generating second noise data related to noise to be removed from the noise removal target data from the first noise data, to generate the second noise data; and noise removal means for using the second noise data generated in the second noise generation means, to generate data after noise removal from the noise removal target data acquired in the acquisition means.

[10] A noise removal system for removing noise from data having a plurality of values, the noise removal system including: acquisition means for acquiring noise removal target data that has a plurality of values and that is a noise removal target; first noise generation means for performing first noise removal processing on the noise removal target data acquired in the acquisition means, to generate first noise data related to noise to be removed by the first noise removal processing; second noise generation means for inputting the first noise data generated in the first noise generation means to a learning model generated in advance by machine learning for generating second noise data related to noise to be removed from the noise removal target data from the first noise data, to generate the second noise data; and noise removal means for using the second noise data generated in the second noise generation means, to generate data after noise removal from the noise removal target data acquired in the acquisition means.

[11] A learning method for generating a learning model that is used to remove noise from data having a plurality of values, the learning method including: an acquisition step for learning of acquiring data for learning that has a plurality of values and that includes noise; a first noise generation step for learning of performing first noise removal processing on the data for learning acquired in the acquisition step for learning, to generate first noise data for learning related to noise to be removed by the first noise removal processing; and a learning step of performing machine learning using the first noise data for learning generated in the first noise generation step for learning as an input to the learning model, to generate the learning model.

[12] The learning method according to Claim 11, in which, in the first noise generation step for learning, frequency components of the data for learning acquired in the acquisition step for learning is generated, and a method of the first noise removal processing is determined based on the generated frequency components.

## Reference Signs List

10: noise removal system
11: acquisition unit
12: first noise generation unit
13: second noise generation unit
14: noise removal unit
20: learning system
21: acquisition unit for learning
22: first noise generation unit for learning
23: learning unit
100: noise removal program
110: recording medium
111: program storage region
101: acquisition module
102: first noise generation module
103: second noise generation module
104: noise removal module
200: learning program
210: recording medium
211: program storage region
201: acquisition module for learning

202: first noise generation module for learning
203: learning module

**Claims**

1.  A noise removal method for removing noise from data having a plurality of values, the noise removal method comprising:

    an acquisition step of acquiring noise removal target data that has a plurality of values and that is a noise removal target;
    a first noise generation step of performing first noise removal processing on the noise removal target data acquired in the acquisition step, to generate first noise data related to noise to be removed by the first noise removal processing;
    a second noise generation step of inputting the first noise data generated in the first noise generation step to a learning model generated in advance by machine learning for generating second noise data related to noise to be removed from the noise removal target data from the first noise data, to generate the second noise data; and
    a noise removal step of using the second noise data generated in the second noise generation step, to generate data after noise removal from the noise removal target data acquired in the acquisition step.

2.  The noise removal method according to Claim 1,

    wherein, in the first noise generation step, quantization is performed on data obtained by the first noise removal processing, to generate the first noise data, and
    in the noise removal step, inverse quantization is performed on the second noise data generated in the second noise generation step, to generate the data after the noise removal from inverse-quantized data.

3.  The noise removal method according to Claim 2,

    wherein, in the first noise generation step, the quantization is performed for each of a plurality of ranges of magnitude of the plurality of values, to generate a plurality of the first noise data, and
    in the second noise generation step, the plurality of first noise data generated in the first noise generation step are input to the learning model, to generate the second noise data.

4.  The noise removal method according to Claim 1 or 2,
    wherein processing via the first noise generation step and the second noise generation step are performed by processing devices having different performances from each other.

5.  The noise removal method according to Claim 1 or 2,
    wherein, in the first noise generation step, a preset filter for performing the first noise removal processing is applied to the noise removal target data as the first noise removal processing, to generate the first noise data.

6.  The noise removal method according to Claim 1 or 2,
    wherein, in the first noise generation step, processing of removing frequency components in a preset range is performed on the noise removal target data as the first noise removal processing, to generate the first noise data.

7.  The noise removal method according to Claim 1 or 2,

    wherein, in the first noise generation step, data of magnitude reflecting magnitude of the plurality of values of the noise removal target data is also generated, and
    in the second noise generation step, the first noise data and the data of magnitude that are generated in the first noise generation step are input to the learning model, to generate the second noise data.

8.  The noise removal method according to Claim 1 or 2,
    wherein the noise removal target data is an image, spectral data, or time-series data.

9.  A noise removal program for removing noise from data having a plurality of values, the noise removal program causing a computer to function as:

acquisition means for acquiring noise removal target data that has a plurality of values and that is a noise removal target;

first noise generation means for performing first noise removal processing on the noise removal target data acquired in the acquisition means, to generate first noise data related to noise to be removed by the first noise removal processing;

second noise generation means for inputting the first noise data generated in the first noise generation means to a learning model generated in advance by machine learning for generating second noise data related to noise to be removed from the noise removal target data from the first noise data, to generate the second noise data; and

noise removal means for using the second noise data generated in the second noise generation means, to generate data after noise removal from the noise removal target data acquired in the acquisition means.

10. A noise removal system for removing noise from data having a plurality of values, the noise removal system comprising:

acquisition means for acquiring noise removal target data that has a plurality of values and that is a noise removal target;

first noise generation means for performing first noise removal processing on the noise removal target data acquired in the acquisition means, to generate first noise data related to noise to be removed by the first noise removal processing;

second noise generation means for inputting the first noise data generated in the first noise generation means to a learning model generated in advance by machine learning for generating second noise data related to noise to be removed from the noise removal target data from the first noise data, to generate the second noise data; and

noise removal means for using the second noise data generated in the second noise generation means, to generate data after noise removal from the noise removal target data acquired in the acquisition means.

11. A learning method for generating a learning model that is used to remove noise from data having a plurality of values, the learning method comprising:

an acquisition step for learning of acquiring data for learning that has a plurality of values and that includes noise;

a first noise generation step for learning of performing first noise removal processing on the data for learning acquired in the acquisition step for learning, to generate first noise data for learning related to noise to be removed by the first noise removal processing; and

a learning step of performing machine learning using the first noise data for learning generated in the first noise generation step for learning as an input to the learning model, to generate the learning model.

12. The learning method according to Claim 11,

wherein, in the first noise generation step for learning, frequency components of the data for learning acquired in the acquisition step for learning is generated, and a method of the first noise removal processing is determined based on the generated frequency components.

# Fig.1

(a)

NOISE REMOVAL SYSTEM — 10

ACQUISITION UNIT — 11

FIRST NOISE GENERATION UNIT — 12

SECOND NOISE GENERATION UNIT — 13

NOISE REMOVAL UNIT — 14

(b)

LEARNING SYSTEM — 20

ACQUISITION UNIT FOR LEARNING — 21

FIRST NOISE GENERATION UNIT FOR LEARNING — 22

LEARNING UNIT — 23

Fig.2

Fig.3

*Fig.4*

Fig.5

# Fig.6

EP 4 586 184 A1

# Fig.7

START

| | |
|---|---|
| ACQUIRE NOISE REMOVAL TARGET DATA | S01 |

| | |
|---|---|
| GENERATE FIRST NOISE DATA VIA FIRST NOISE REMOVAL PROCESSING | S02 |

| | |
|---|---|
| GENERATE SECOND NOISE DATA BY USING LEARNING MODEL | S03 |

| | |
|---|---|
| GENERATE DATA AFTER NOISE REMOVAL | S04 |

| | |
|---|---|
| OUTPUT DATA AFTER NOISE REMOVAL | S05 |

END

# *Fig.8*

```
              START

ACQUIRE DATA FOR LEARNING          ~S11

GENERATE FIRST NOISE DATA
FOR LEARNING VIA FIRST NOISE       ~S12
   REMOVAL PROCESSING

GENERATE LEARNING MODEL VIA
   MACHINE LEARNING USING          ~S13
FIRST NOISE DATA FOR LEARNING

OUTPUT LEARNING MODEL              ~S14

               END
```

# Fig.9

(a)

(b)

# Fig.10

EP 4 586 184 A1

Fig.11

EP 4 586 184 A1

# Fig.12

*Fig.13*

EP 4 586 184 A1

Fig.14

## Fig.15

(a)

(b)

EP 4 586 184 A1

# Fig.16

## Fig.17

FILTER CUTOFF FREQUENCY: 0.14

$\sigma = 2.24$

FILTER CUTOFF FREQUENCY: 0.13

$\sigma = 2.45$

FILTER CUTOFF FREQUENCY: 0.11

$\sigma = 2.65$

FILTER CUTOFF FREQUENCY: 0.1

$\sigma = 2.83$

FILTER CUTOFF FREQUENCY: 0.09

$\sigma = 3.00$

Frequency[1/pixel]

# Fig.18

ch1: DIFFERENCE

ch2: QUANTIZATION

ch3: DIFFERENCE (OVERFLOW)

EP 4 586 184 A1

## Fig.19

(a)

STANDARD DEVIATION(QUANTIZED BIT NUMBER OF LEARNING MODEL: int8)

| | (1) | (2) | (3) | (4) |
|---|---|---|---|---|
| ORIGINAL IMAGE | 7.11 | 8.05 | 9.17 | 8.77 |
| Int8 NORMAL SIGNAL INFERENCE | 2.54 | 2.84 | 3.57 | 3.59 |
| Int8 NORMAL NOISE INFERENCE | 3.24 | 3.42 | 3.50 | 3.44 |
| Int8 1-ch NOISE INFERENCE (Gaussian σ = 1.8) | 1.90 | 2.11 | 2.20 | 2.16 |
| Int8 2-ch NOISE INFERENCE (Gaussian σ = 1.8) | 1.78 | 2.00 | 2.11 | 2.06 |
| Int8 3-ch NOISE INFERENCE (Gaussian σ = 1.8) | 1.68 | 1.88 | 1.95 | 1.91 |

(b)

STANDARD DEVIATION(QUANTIZED BIT NUMBER OF LEARNING MODEL: FP32)

| | (1) | (2) | (3) | (4) |
|---|---|---|---|---|
| FP32 NORMAL NOISE INFERENCE | 1.20 | 1.50 | 1.61 | 1.56 |
| FP32 2-CHANNEL NOISE INFERENCE (Gaussian σ = 1.8) | 0.81 | 1.17 | 1.25 | 1.18 |

Fig.20

IMAGE EXAMPLE
(QUANTIZED BIT NUMBER
OF LEARNING MODEL: FP32)

NORMAL NOISE
INFERENCE

DIFFERENCE 2-ch
NOISE INFERENCE

NORMAL NOISE
INFERENCE

DIFFERENCE 3-ch
NOISE INFERENCE

IMAGE EXAMPLE
(QUANTIZED BIT NUMBER
OF LEARNING MODEL: int8)

NORMAL SIGNAL
INFERENCE

DIFFERENCE 2-ch
NOISE INFERENCE

ORIGINAL IMAGE

DIFFERENCE 1-ch
NOISE INFERENCE

# Fig.21

IMAGE EXAMPLE
(QUANTIZED BIT NUMBER
OF LEARNING MODEL: int8)

IMAGE EXAMPLE
(QUANTIZED BIT NUMBER
OF LEARNING MODEL: FP32)

ORIGINAL IMAGE

NORMAL SIGNAL
INFERENCE

NORMAL NOISE
INFERENCE

NORMAL NOISE
INFERENCE

DIFFERENCE 1-ch
NOISE INFERENCE

DIFFERENCE 2-ch
NOISE INFERENCE

DIFFERENCE 3-ch
NOISE INFERENCE

DIFFERENCE 2-ch
NOISE INFERENCE

EP 4 586 184 A1

*Fig.22*

IMAGE EXAMPLE
(QUANTIZED BIT NUMBER
OF LEARNING MODEL: int8)

IMAGE EXAMPLE
(QUANTIZED BIT NUMBER
OF LEARNING MODEL: FP32)

ORIGINAL IMAGE

NORMAL SIGNAL
INFERENCE

NORMAL NOISE
INFERENCE

NORMAL NOISE
INFERENCE

DIFFERENCE 1-ch
NOISE INFERENCE

DIFFERENCE 2-ch
NOISE INFERENCE

DIFFERENCE 3-ch
NOISE INFERENCE

DIFFERENCE 2-ch
NOISE INFERENCE

# Fig.23

IMAGE AND
BACKGROUND POSITION

TRANSITION OF NUMBER OF
LOOPS OF LEARNING AND S.D.

|  | 0 | 100 | 200 | 300 | 400 | 500 | 600 | 700 | 800 | 900 | 1000 |
|---|---|---|---|---|---|---|---|---|---|---|---|
| NORMAL LEARNING | 7.13 | 1.56 | 1.15 | 0.97 | 0.97 | 0.93 | 0.82 | 1.33 | 0.78 | 0.77 | 0.77 |
| DIFFERENCE TARGET LEARNING | 7.13 | 1.37 | 0.80 | 0.74 | 0.68 | 0.69 | 0.67 | 0.67 | 0.68 | 0.67 | 0.65 |

EP 4 586 184 A1

# Fig.24

(a)

RECORDING MEDIUM —— 110

PROGRAM STORAGE REGION ——111

NOISE REMOVAL PROGRAM —— 100

ACQUISITION MODULE —— 101

FIRST NOISE
GENERATION MODULE —— 102

SECOND NOISE
GENERATION MODULE —— 103

NOISE REMOVAL MODULE —— 104

(b)

RECORDING MEDIUM —— 210

PROGRAM STORAGE REGION ——211

LEARNING PROGRAM —— 200

ACQUISITION
MODULE FOR LEARNING —— 201

FIRST NOISE GENERATION
MODULE FOR LEARNING —— 202

LEARNING MODULE —— 203

## INTERNATIONAL SEARCH REPORT

| International application No. |
|---|
| **PCT/JP2023/023576** |

**A. CLASSIFICATION OF SUBJECT MATTER**

*G06T 5/00*(2006.01)i; *G06N 20/00*(2019.01)i
FI:  G06T5/00 705; G06N20/00

According to International Patent Classification (IPC) or to both national classification and IPC

**B. FIELDS SEARCHED**

Minimum documentation searched (classification system followed by classification symbols)

G06T5/00; G06N20/00; A61B5/00-6/00; G09G5/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2022-64389 A (PLUSMAN LLC) 26 April 2022 (2022-04-26)<br>paragraphs [0010]-[0022], fig. 1 | 1-12 |
| A | JP 2021-71936 A (HAMAMATSU PHOTONICS KK) 06 May 2021 (2021-05-06)<br>paragraphs [0024]-[0025], fig. 3 | 1-12 |
| A | JP 2020-64609 A (GENERAL ELECTRIC COMPANY) 23 April 2020 (2020-04-23)<br>paragraph [0088], fig. 13 | 1-12 |
| A | JP 2018-206382 A (TOSHIBA CORP.) 27 December 2018 (2018-12-27)<br>paragraphs [0089]-[0090], fig. 13 | 1-12 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **28 August 2023** | **05 September 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/023576**

| Patent document cited in search report | | | Publication date (day/month/year) | Patent family member(s) | Publication date (day/month/year) |
|---|---|---|---|---|---|
| JP | 2022-64389 | A | 26 April 2022 | (Family: none) | |
| JP | 2021-71936 | A | 06 May 2021 | (Family: none) | |
| JP | 2020-64609 | A | 23 April 2020 | US 2020/0065940 A1 paragraph [0106], fig. 13 EP 3633601 A1 CN 110858391 A KR 10-2020-0026071 A | |
| JP | 2018-206382 | A | 27 December 2018 | US 2018/0349759 A1 paragraphs [0118]-[0119], fig. 13 EP 3410392 A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022101507 A